(19)

Europäisches
Patentamt
European
Patent Office
Office européen
des brevets

(11) **EP 2 068 312 B1**

(12) **EUROPEAN PATENT SPECIFICATION**

(45) Date of publication and mention
of the grant of the patent:
**28.07.2010 Bulletin 2010/30**

(51) Int Cl.:
***G11B 7/0045*** *(2006.01)* ***G11B 7/24*** *(2006.01)*

(21) Application number: **08253670.7**

(22) Date of filing: **10.11.2008**

(54) **Optical information recording medium**

Optisches Informationsaufzeichnungsmedium

Support d'enregistrement d'informations optiques

(84) Designated Contracting States:
**DE FR GB NL**

(30) Priority: **03.12.2007 JP 2007312922**

(43) Date of publication of application:
**10.06.2009 Bulletin 2009/24**

(73) Proprietor: **Sony Corporation**
**Tokyo (JP)**

(72) Inventors:
 • **Kobayashi, Tomio**
  **Tokyo (JP)**
 • **Kudo, Takao**
  **Tokyo (JP)**
 • **Hayashibe, Kazuya**
  **Tokyo (JP)**

 • **Suzuki, Yusuke**
  **Tokyo (JP)**
 • **Kanesaka, Tomoki**
  **Tokyo (JP)**
 • **Fukushima, Yoshihito**
  **Tokyo (JP)**
 • **Uchiyama, Hiroshi**
  **Tokyo (JP)**

(74) Representative: **Horner, David Richard et al**
 **D Young & Co LLP**
 **120 Holborn**
 **London EC1N 2DY (GB)**

(56) References cited:
 **US-A- 4 069 487   US-A- 4 285 056**
 **US-A- 4 300 227   US-A1- 2006 182 924**

EP 2 068 312 B1

**Description**

BACKGROUND OF THE INVENTION

The present invention relates to an optical information recording medium, and is preferably applied to, for example, an optical information recording medium on which information is recorded by an optical beam and from which the information is reproduced by an optical beam.

As an optical information recording medium, a discoid optical information recording medium, such as Compact Disc (CD), Digital Versatile Disc (DVD), and "Blu-ray Disc (Registered Trademark: also referred to as "BD")" has been popular.

On the other hand, an optical information recording and reproducing device that supports such an optical information recording medium is designed to record on the optical information recording medium various kinds of information, such as various kinds of content including music content and video content, and various kinds of data including data for computers. Especially in recent years, an amount of information is increasing due to improvements in graphic resolution and sound quality, and there is a demand for an optical information recording medium that can store more pieces of content. Accordingly, there is a demand for larger capacity of optical information recording medium.

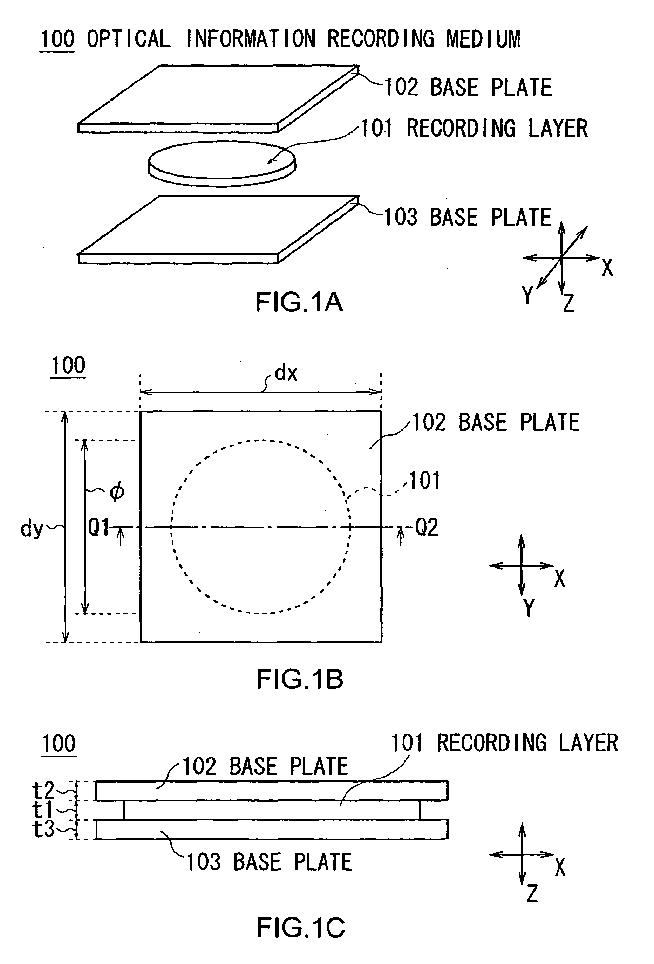

Accordingly, one of the methods to increase the capacity of the optical information recording medium is disclosed in Jpn. Pat. Laid-open Publication No. 2006-78834(FIG. 1): recording marks are formed as a result of the interference between two optical beams as microscopic holograms as if they pile up in a direction of the thickness of the optical information recording medium. Therefore, one recording layer appears to have a plurality of layers on which information is recorded.

By the way, it is considered to be possible that information is recorded on a plurality of layers in one recording layer of an optical information recording medium by forming a cavity (air bubble) around a focal point of an emitted optical beam, whose heat contributes to the formation of the cavity, and regarding the cavity as a recording mark.

However, there is a problem that this optical information recording medium's recording speed is not fast, because the optical information recording medium has a low sensitivity to the optical beam, and therefore needs to be exposed to the optical beam for a relatively long time before the recording mark is formed.

US2006/182924 A1 discloses an optical data recording medium provided with at least one photosensitive layer and one deformable layer. US 4,300,227 and US 4,285,056 disclose an optical recording medium comprising a light reflective layer, a light transmissive layer and a light absorptive layer.

SUMMARY OF THE INVENTION

The present invention has been made in view of the above points and is intended to provide an optical information recording medium that can increase the recording speed.

In one aspect of the present invention, an optical information recording medium contains a recording layer that includes: a recording area on which a cavity is formed as a recording mark as a result of an increase in temperature around a focal point after absorbing a recording beam converged for recording of information in accordance with the wavelength of the recording beam and from which, when a predetermined reading beam is emitted for reproducing of the information, the information is reproduced based on the optically modulated reading beam; and a non-recording area provided adjacent to the recording area to prevent the heat around the focal point from dispersing, wherein the recording area is a resin that has been solidified by polymerization and further comprises vaporization material, and wherein the recording area and the non-recording area appear alternately in the direction of the thickness of the optical information recording medium.

Since the recording area can retain the heat generated around the focal point, the temperature around the focal point rapidly increases. This reduces the time required to form the recording mark.

According to an embodiment of the present invention, since the recording area can retain the heat generated around the focal point, the temperature around the focal point rapidly increases. This reduces the time required to form the recording mark. Thus, an optical information recording medium that can improve the recording time can be realized.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

The present invention will be described further, by way of example only, with reference to preferred embodiments thereof as illustrated in the accompanying drawings, in which:

FIGS. 1A to 1C are schematic diagrams illustrating the configuration of an optical information recording medium according to an example useful for understanding the present invention;

FIG. 2 is a schematic diagram illustrating an initialization beam;

FIG. 3 is a schematic diagram schematically illustrating photoinitiator residue;

FIGS. 4A to 4C are schematic diagrams illustrating the emission of an optical beam;

FIG. 5 is a schematic diagram illustrating the configuration of an optical information recording and reproducing device;

FIGS. 6A and 6B are schematic diagrams illustrating the recording and reproducing of information;

FIGS. 7A and 7B are schematic diagrams illustrating the detection of a returning optical beam;

FIGS. 8A and 8B are schematic diagrams illustrating the configuration of an optical information recording medium according to an embodiment of the present invention;

FIG. 9 is a schematic diagram illustrating a valid height of the recording optical beam:

FIG. 10 is a schematic diagram illustrating dispersion of a recording beam heat according to an example useful for understanding the present invention;

FIG. 11 is a schematic diagram illustrating the dispersion of a recording beam heat according to an embodiment of the present invention;

FIGS. 12A and 12B are schematic diagrams illustrating the formation of a recording mark according to another embodiment of the present invention;

FIGS. 13A to 13C are schematic diagrams illustrating the production of an optical information recording medium according to an embodiment of the present invention (1);

FIGS. 14A to 14D are schematic diagrams illustrating the production of an optical information recording medium according to an embodiment of the present invention (2);

FIGS. 15A and 15B are schematic diagrams illustrating the production of an optical information recording medium according to an embodiment of the present invention (3);

FIG. 16 is a schematic diagram illustrating the configuration of a sample according to a practical example 2; and

FIGS. 17A and 17B are schematic diagrams illustrating the configuration of a sample according to a comparison example 1.

## DETAILED DESCRIPTION OF PREFERRED EMBODIMENTS

An embodiment of the present invention will be described in detail with reference to the accompanying drawings.

(1) Example

(1-1) Configuration of Optical Information Recording Medium

As shown in FIGS. 1A to 1C, an optical information recording medium 100 includes a base plate 102 and a base plate 103. Between the base plates 102 and 103, a recording layer 101 is formed. Accordingly, the optical information recording medium 100, as a whole, works as a medium on which information is recorded.

The base plates 102 and 103 are glass substrates. The base plates 102 and 103 have high light transmittance. The base plates 102 and 103 are square or rectangular in shape: the lengths dx and dy of the base plates 102 and 103 in X and Y directions are about 50 mm while the thickness t2 and the thickness t3 are about 0.6 to 1.1 mm.

AntiReflection coating (AR) is applied to the outer surfaces of the base plates 102 and 103 (those surfaces does not touch the recording layer 101) by four-layer anorganic substances ($Nb_2O_2/SiO_2/Nb_2O_5/SiO_2$) that do not reflect an optical beam whose wavelength is about 405 to 406 nm.

By the way, the base plates 102 and 103 can be made from various optical materials other than glass plates: acrylate resin, polycarbonate resin, or the like. The thickness t2 and t3 of the base plates 102 and 103 is not limited to the above value: they may be between 0.05 mm to 1.2 mm. The thickness t2 may be the same as or different from the thickness t3. Moreover, AR coating may not be applied to the outer surfaces of the base plates 102 and 103.

An uncured fluid material M1 is spread on the base plate 103: photopolymer is formed from the fluid material M1 by polymerization (described later in detail). After that, the base plate 102 is put on the fluid material M1. As a result, the optical information recording medium 100 (referred to as "uncured optical information recording medium 100a", hereinafter) is formed: its portion corresponding to the recording layer 101 (FIG. 1) is the uncured fluid material M1.

In this manner, the uncured optical information recording medium 100a, as a whole, is a thin plate: the uncured fluid material M1, which will be cured to be photopolymer, is sandwiched between the transparent base plates 102 and 103.

In the fluid material M1, monomer, oligomer, or both of them (referred to as "monomers", hereinafter) are evenly spread. If the fluid material M1 is exposed to light, the light-exposed monomers are polymerized (i.e. photopolymerized) to form photopolymer, changing its reflectance and refractive index. Moreover, the reflectance and refractive index may change due to photocrosslinking: photocrosslinking occurs between photopolymers after being exposed to light, increasing the molecular mass.

In fact, part or almost all of the fluid material M1 contains photopolymerization-type and photocrosslinking-type resin (these resins are referred to as "ultra-violet curable resins", hereinafter). The photopolymerization-type and photocrosslinking-type resin for example includes radical polymerization-type monomers and radical generation-type photoinitiators, or includes cationic polymerization-type monomers and cationic generation-type photoinitiators.

Incidentally, those monomers are the publicly known monomers: for example, as radical polymerization-type monomers, there are acrylic acid, acryl ester, derivatives of acrylic acid amides, derivatives of styrene and vinylnaphthalene, and the like, which are monomers used for radical polymerization. Moreover, a compound including acrylic monomer with the structure of urethane can be also applied. Furthermore, a derivative whose hydrogen atoms are replaced by halogen atoms can be used as the above-noted monomers.

Specifically, for example, the radical polymerization-type monomers are acryloyl morpholine, phenoxy ethyl acrylate, isobornyl acrylate, 2-hydroxy propyl acrylate, 2-ethyl hexyl acrylate, 1,6- hexane diol diacrylate, tripropylene glycol diacrylate, neopentyl glycol PO-modified diacrylate, 1,9-nonanediol diacrylate, hydroxypivalate neopentyl glycol diacrylate. Incidentally, they may be monofunctional or multifunctional.

Moreover, the cationic polymerization-type monomers may be the publicly known compounds including epoxy or vinyl groups to generate cation: for example, there are epoxycyclohexylmethyl acrylate, glycidyl acrylate, vinyl ether, oxetane.

The radical generation-type photoinitiators may be the publicly-known compounds: for example, there are 2,2-dimethoxy-1,2-diphenylethan-1-one (IRGACURE (Registered Trademark: referred to as "Irg-", hereinafter) 651, Chiba Specialty Chemicals), 1-[4-(2-hydroxyethoxy) phenyl]-2-hidoroxy-2-methyl-1-propan-1-one (Irg-2959, Chiba Specialty Chemicals), bis(2,4,6-trimethylbenzoyl)-phenylphosphineoxideone (Irg-819, Chiba Specialty Chemicals).

The cationic generation-type photoinitiators may be the publicly-known compounds: for example, there are diphenyliodonium hexafluorophosphate, tri-p-trisulphonium hexafluorophosphate, cumyltrile iodonium hexafluorophosphate, cumyltrile iodonium tetrakis (pentafluorophenyl) boron.

Incidentally, by using the cationic polymerization-type monomers and the cationic generation-type photoinitiators, the degree of cure shrinkage of the fluid material M1 can be reduced, compared with when the radical polymerization-type monomers and the radical generation-type photoinitiators are used. Moreover, anionic-type monomers and photoinitiators may be used in combination as photopolymerization-type and photocrosslinking-type resin.

Moreover, materials are appropriately selected for photopolymerization-type monomers, photocrosslinking-type monomers, and photoinitiators: especially, materials of the photoinitiators are appropriately selected. This allows photopolymerization to occur at a desired wavelength. Incidentally, the fluid material M1 may include appropriate amounts of additive agents, such as a polymerization inhibitor, which prevents the fluid material M1 from reacting to unplanned beams, a polymerization promoter, which promotes polymerization.

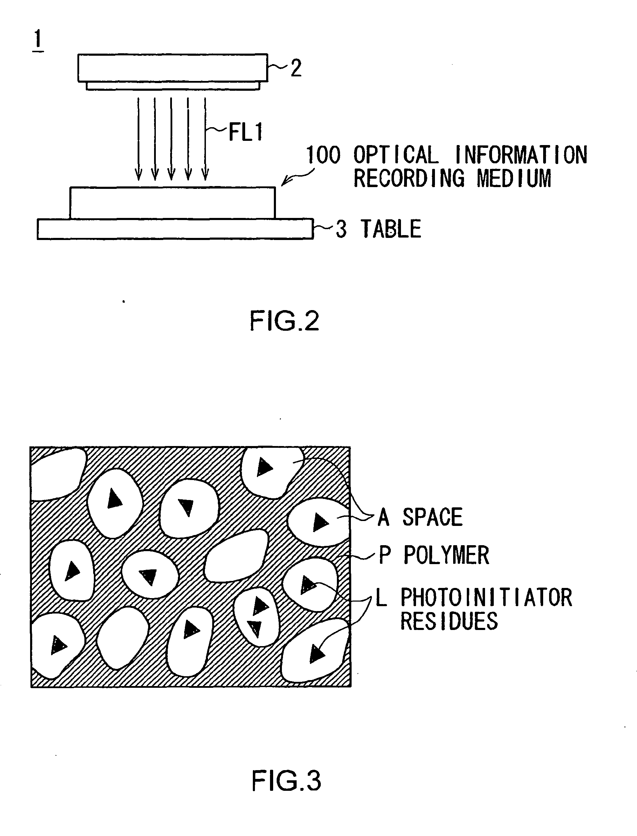

As shown in FIG. 2, an initialization device 1 emits an initialization beam L1 from an initialization beam source 2 to initialize the fluid material M1. As a result, the fluid material M1 serves as the recording layer 101 on which a recording mark is recorded.

Specifically, the initialization beam source 2 of the initialization device 1 emits the initialization beam L1 whose wavelength is for example 365 nm (300 mW/cm2; Direct Current (DC) output, for example) to the flat optical information recording medium 100 put on a table 3. The wavelength and intensity of the initialization beam L1 are selected appropriately according to the type of the photoinitiator used for the fluid material M1 and the thickness t1 of the recording layer 101.

Incidentally, the initialization beam source 2 may be a high power beam source, such as a high-pressure mercury-vapor lamp, a high intensity discharge lamp, a solid laser and a semiconductor laser.

Moreover, the initialization beam source 2 includes a driving section (not shown) that moves in X and Y directions (right and frontward directions in diagrams, respectively). Accordingly, the initialization beam source 2 emits the initialization beam L1 to the uncured optical information recording medium 100a evenly from an appropriate position.

At this time, the fluid material M1 starts a photopolymerization reaction, a photocrosslinking reaction, or both of them (these are collectively referred to as "optical reaction") regarding the monomers and generates radical and cation from the photoinitiators in the fluid material M1. In step with these reactions, a photocrosslinking reaction of the monomers also happens. As a result, the monomers are polymerized and become photopolymer. In this manner, the monomers get rigid and work as the recording layer 101.

At this time, the optical reactions happen evenly on the fluid material M1. Accordingly, any portion of the recording layer 101 has the same refractive index. This means that information is not recorded on the initialized base optical information recording medium 100 because the amount of light reflected at any point of the optical information recording medium 100 is the same.

Moreover, thermal polymerization-type or thermal crosslinking-type resin (referred to as "thermal curable resin", hereinafter), which reacts to heat, may be used for the recording layer 101. In this case, the fluid material M1, or thermal curable resin before being cured, includes monomers and curing agent that are evenly spread inside the fluid material M1. This fluid material M1 are polymerized or crosslinked at high or ambient temperatures (referred to as "thermal polymerization", hereinafter), thereby becoming polymer. As a result, the refractive index and reflectance change accordingly.

In reality, for example, the fluid material M1 is a combination of thermal polymerization-type monomers, which would form polymer, and a curing agent. The fluid material M1 also contains a predetermined amount of the above-noted photoinitiators. Incidentally, in order to prevent the photoinitiators from evaporating, it is desirable that the thermal polymerization-type monomers and the curing agent are polymerized at ambient or relatively low temperatures. Moreover, it is possible to cure the thermal polymerization-type monomers by applying heat to it before adding the photoinitiators.

Incidentally, the thermal polymerization-type monomers may be the publicly known monomers: for example, there are various monomers, including those used for phenol resin, melamine resin, urea resin, polyurethane resin, epoxy resin, unsaturated polyester resin, and the like.

Moreover, the curing agent may be the publicly known curing agents: for example, there are various curing agents, including amines, polyamide resin, imidazoles, polysulfide resin, and isocyanate. They are selected based on the rate of reaction and the characteristics of monomers. They may include a curing adjunct, which helps promote the curing reaction, and other additives.

Furthermore, the recording layer 101 can be made from thermoplastic resin. In this case, the fluid material M1, which is spread on the base plate 103, is produced by diluting a polymer with a predetermined diluting solvent and adding a predetermined amount of the above photoinitiator, for example.

Incidentally, the thermoplastic resin may be the publicly known resin: for example, there are various resins, including olefin resin, polyvinyl chloride resin, polystyrene, Acrylonitrile Butadiene Styrene Copolymer (ABS) resin, polyethylene terephthalate, acrylate resin, poly-vinyl alcohol, polyvinylidene chloride resin, polycarbonate resin, polyamide resin, acetal resin, and norbornene resin.

Moreover, the diluting solvent may be chosen from various solvents, including water, alcohols, ketones, aromatic solvents, halogen solvents, or made by mixing them. Incidentally, they may include various additives, including plasticizing materials that change the physical characteristics of the thermoplastic resin.

(1-2) Basic Concept for Recording and Reproducing from Recording Marks

If the fluid material M1 is a ultra-violet curable resin, the photoinitiator serves as a starter and the optical reaction proceeds via chain reaction. Accordingly, a very small amount of the photoinitiator is consumed in theory. However, in order to effectively promote the optical reaction of the fluid material M1, an excessive amount of the photoinitiator is used, compared with the actually consumed amount of the photoinitiator.

As shown in FIG. 3, in a polymer P of the recording layer 101 of the initialized optical information recording medium 100, there are spaces A: the polymer P is generated after the monomers are polymerized. Inside some of the spaces A, there are remaining photoinitiators (referred to as "photoinitiator residues", hereinafter) L.

If the thermal polymerization-type monomers and the thermoplastic resin are used with the photoinitiators, the photoinitiators may not be consumed due to some sort of reaction and left inside the recording layer 101. Accordingly, some of the spaces may contain the photoinitiator residues, like the ultra-violet curable resin. Moreover, residual solvents, or remaining diluting solvents, and unreacted monomers may be left over the recording layer 101.

As for the optical information recording medium 100, the fluid material M1 is produced by adding a vaporization material, such as photoinitiators, residual solvents, or monomers, whose vaporization temperatures, at which they vaporize due to boiling or decomposition, are between 140 and 400 degrees Celsius ("between 140 and 400 degrees" and "140 to 400 degrees" mean "greater than or equal to 140 and less than or equal to 400 degrees": "between" and "to" are used in the same way, hereinafter). In this manner, the initialized recording layer 101 contain the vaporization materials whose vaporization temperatures are between 140 and 400 degrees C.

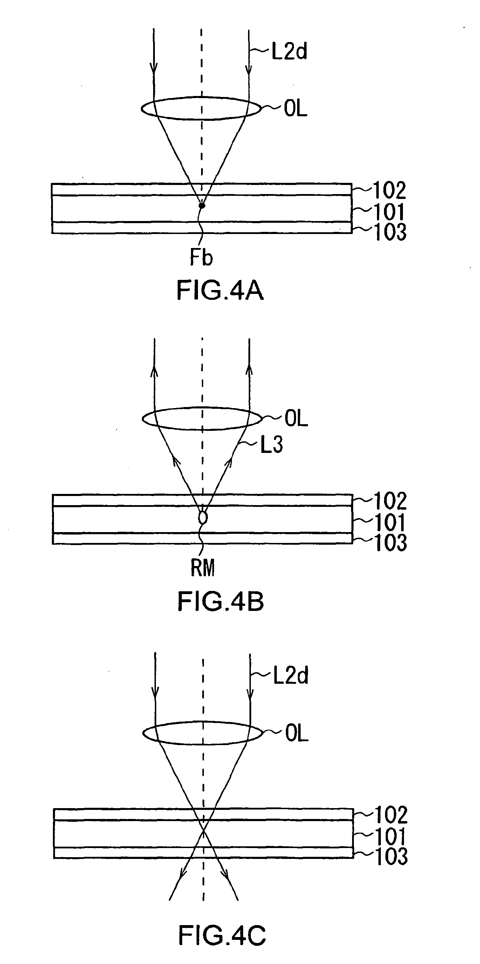

As shown in FIG. 4, when a predetermined recording optical beam L2 (referred to as "recording optical beam L2c", hereinafter) is emitted to the recording layer 101 via an objective lens OL, the portion around a focal point Fb of the recording optical beam L2c heats up locally, for example, exceeding 150 degrees C.

At this time, the recording optical beam L2c vaporizes the vaporization materials that exist inside the portion of the recording layer 101 around the focal point Fb, increasing its volume. As a result, an air bubble is formed at the focal point Fb. At this time, the vaporized photoinitiator residues pass through inside the recording layer 101 without changing their state, and are cooled down after the emission of the recording optical beam L2c is stopped, becoming a small volume of fluid. Accordingly, only the air bubble, or a cavity, is left around the focal point Fb. Incidentally, the resins like the one used for the recording layer 101 usually allows air to pass therethrough at a constant speed: finally, the cavity may be filled with air.

In this manner, in the optical information recording medium 100, the vaporization materials in the recording layer 101 are vaporized by the recording optical beam L2c. Accordingly, as shown in FIG. 4A, the air bubble, or the cavity, is formed at the focal point Fb as a recording mark RM.

Generally, a refractive index $n_{101}$ of the photopolymer that is used for the recording layer 101 is approximately 1.5, while a refractive index $n_{AIR}$ of the air is 1.0. Accordingly, when a reading optical beam L2d is emitted to the recording mark RM on the recording layer 101, the reading optical beam L2d is reflected due to the difference between the refractive indexes around the surface of the recording mark RM, generating the relatively strong intensity of a returning optical beam L3, as shown in FIG. 4B.

On the other hand, when the reading optical beam L2d (referred to as "reading optical beam L2d", hereinafter) is emitted to a certain target position where there is no recording mark RM as shown in FIG. 4C, the reading optical beam L2d is not reflected because the area around the target position has the same refractive index $n_{101}$.

Accordingly, as for the optical information recording medium 100, the reading optical beam L2d is emitted to a target position on the recording layer 101, and the intensity of the returning optical beam L3, or the reflection from the optical information recording medium 100, is detected to determine whether the recording mark RM exists or not on the recording layer 101. As a result, the information recorded on the recording layer 101 is reproduced.

(1-3) Configuration of Optical Information Recording and Reproducing Device

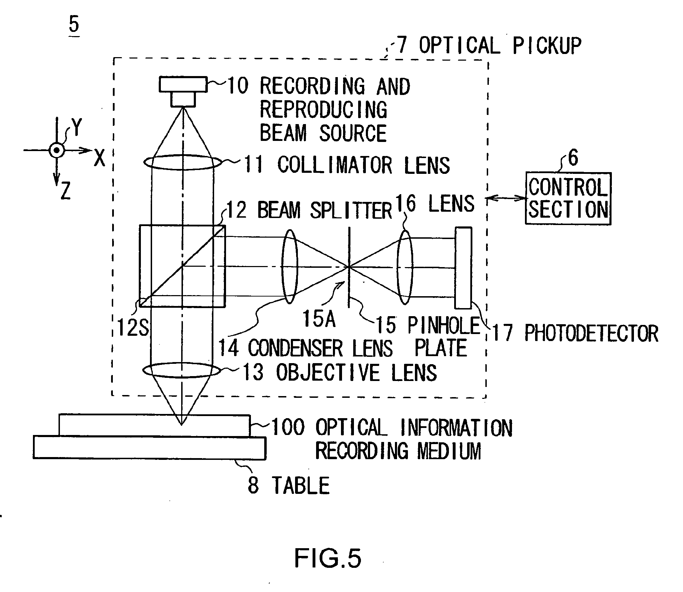

With reference to FIG. 5, an optical information recording and reproducing device 5 is designed to emit a beam to the recording layer 101 of the optical information recording medium 100 to record information on a plurality of recording mark layers that are expected to exist in the recording layer 101, and to reproduce the information (the recording mark layers are referred to as "imaginary recording mark layers", hereinafter).

The optical information recording and reproducing device 5 includes a control section 6, which includes Central Processing Unit (CPU), to take overall control of the device. The control section 6 reads out from Read Only Memory (ROM: not shown) various programs, including a basic program, an information recording program, and an information reproducing program, and loads them onto Random Access Memory (RAM: not shown). In this manner, the control section 6 performs various processes, such as an information recording process and an information reproducing process.

The control section 6 controls an optical pickup 7 to emit a beam from the optical pickup 7 to the optical information recording medium 100, and to receive the reflection from the optical information recording medium 100.

Under the control of the control section 6, for example, the optical pickup 7 emits from a recording and reproducing beam source 10 (which is a laser diode) an optical beam L2 whose wavelength is for example 405 to 406 nm in the form of DC output. After a collimator lens 11 collimates the diverging optical beam L2, the optical pickup 7 lets it enter a beam splitter 12.

Incidentally, under the control of the control section 6, the recording and reproducing beam source 10 can adjust the intensity of the optical beam 2.

The beam splitter 12 allows part of the optical beam L2 to pass through a reflection and transmission plane 12S, and lets it enter the objective lens 13. The objective lens 13 converges the optical beam L1, and then focuses it on an arbitrary position inside the optical information recording medium 100.

Moreover, when receiving the returning optical beam L3 from the optical information recording medium 100, the objective lens 13 collimates the returning optical beam L3, and lets it enter the beam splitter 12. The reflection and transmission plane 12S of the beam splitter 12 reflects part of the returning optical beam L3, and lets it enter a condenser lens 14.

The condenser lens 14 converges the returning optical beam L3 and lets it pass through a pinhole 15A of a pinhole plate 15. At this time, the pinhole 15A selectively allows only the returning optical beam L3, or the beam reflected by the desired imaginary recording mark layer, to pass therethrough, and leads it to a photodetector 17 via a lens 16.

The photodetector 17 detects the intensity of the returning optical beam L3, generates a detection signal according to the detected intensity, and transmits the detection signal to the control section 6. Therefore, the control section 6 can recognize the detection state of the returning optical beam L3 based on the detection signal.

By the way, the optical pickup 7 is equipped with a driving section (not shown). Under the control of the control section 6, the driving section moves in three-axis directions, or in X, Y and Z directions. In reality, by controlling the position of the optical pickup 7, the control section 6 places the focal point of the optical beam L2 at a desired position.

In that manner, the optical information recording and reproducing device 5 focuses the optical beam L2 on an arbitrary position inside the optical information recording medium 100, and detects the returning optical beam L3 coming from the optical information recording medium 100.

(1-4) Practical Examples

(1-4-1) Practical Example 1

Samples S1 to S8 of the optical information recording medium 100 are produced under the following condition. In order to check the effect caused by the difference in vaporization temperature between the photoinitiators, each of the Samples S1 to S8 includes one type of monomer to which the same amount of eight photoinitiators, each of which has a different vaporization temperature, are added.

The fluid material M1 is produced by adding 1.0 part by weight photoinitiator to 100 parts by weight mixture of an acrylic acid ester monomer (acryl ester of p-cumylphenol ethyleneoxide adducts) and an urethane bifunctional acrylate oligomer (weight ratio: 40:60), and mixing and defoaming them under a dark room. The following photoinitiators are used for each sample.

Sample S1: DAROCUR (Registered Trademark) 1173 (2-Hydroxy-2-methyl-1-phenyl-propan-1-one, Chiba Specialty Chemicals)
Sample S2: Irg-184 (1-Hydroxy-cyclohexyl-phenyl-ketone, Chiba Specialty Chemicals)
Sample S3: Irg-784 (Bis (η-2,4-cyclopentadien-1-yl)-Bis (2,6-difluoro-3-1H-pyrrol-1-yl)-phenyl) titanium, Chiba Specialty Chemicals)
Sample S4: Irg-907 (2-Methyl-1-[4-(methylthio)phenyl]-2-morpholinyl propanone, Chiba Specialty Chemicals)
Sample S5: Irg-369 (2-Benzyl-2-dimethylamino-1-(4-morpholinyl)-butanone-1, Chiba Specialty Chemicals)
Sample S6: SCTP (Sony Chemical & Information Device Corporation)
Sample S7: X-32-24 (Sony Chemical & Information Device Corporation)
Sample S8: UVX4 (Sony Chemical & Information Device Corporation)

The uncured optical information recording medium 100a is produced by sandwiching the fluid material M1 in between the base plates 102 and 103 after the fluid material M1 is spread over the base plate 103. After that, to the uncured optical information recording medium 100a, a first initialization beam source 1, which is a high-pressure mercury-vapor lamp, emits the initialization beam L1 (whose power density is 250 mW/cm$^2$ when the wavelength is 365 nm) for 10 seconds, thereby producing Sample S1 as the optical information recording medium 100. As for each Sample S1 to S8, the thickness t1 of the recording layer 101 is 0.5 mm, the thickness t2 of the base plate 102 is 0.7 mm, and the thickness t3 of the base plate 103 is 0.7 mm.

The table below shows the blending quantities of the monomers and photoinitiators used for the fluid materials M1 of Samples S1 to S8:

Table 1

| Table 1 | Sample No. | 1 | 2 | 3 | 4 | 5 | 6 | 7 | 8 |
|---|---|---|---|---|---|---|---|---|---|
| Monomer | acrylic acid ester monomer | 40 | 40 | 40 | 40 | 40 | 40 | 40 | 40 |
| | urethane bifunctional acrylate oligomer | 60 | 60 | 60 | 60 | 60 | 60 | 60 | 60 |
| Photoinitiator | DAROCUR1173 | 1 | - | - | - | - | - | - | - |
| | Irg-184 | - | 1 | - | - | - | - | - | - |
| | Irg-784 | - | - | 1 | 1 | - | - | - | - |
| | Irg-907 | - | - | - | - | 1 | - | - | - |
| | Irg-369 | - | - | - | - | - | - | - | - |
| | SCTP | - | - | - | - | - | 1 | - | - |
| | X-32-24 | - | - | - | - | - | - | 1 | - |
| | UVX4 | - | - | - | - | - | - | - | 1 |

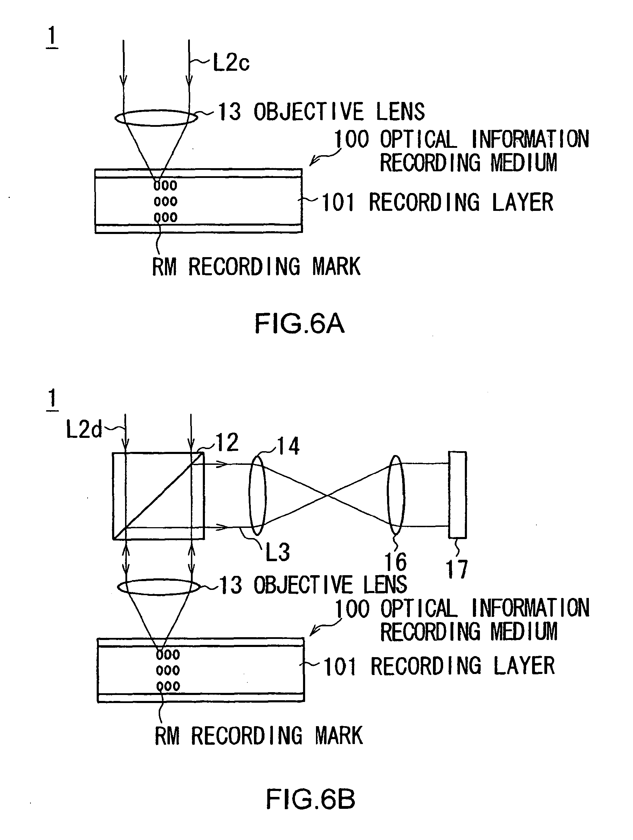

As shown in FIG. 6A, when recording information on the optical information recording medium 100, the optical information recording and reproducing device 5 focuses the recording optical beam L2c emitted from the recording and reproducing beam source 10 (FIG. 5) on a point inside the recording layer 101. In this case, by controlling the position of the optical pickup 7 (FIG. 5) in X, Y, and Z directions, the optical information recording and reproducing device 5 focuses the recording optical beam L2c (FIG. 6A) on a target position inside the recording layer 101.

At this time, the recording optical beam L2c is converged at the target position inside the recording layer 101, and the temperature around it rises. As a result, the temperature of the photoinitiator residues exceeds the vaporization temperature of the photoinitiator, vaporizing the photoinitiator residues and forming a cavity, or a recording mark RM, at the target position.

Specifically, the optical information recording and reproducing device 5 sets the target position at a depth of 200 um from the surface of the recording layer 101; the recording and reproducing beam source 10 emits the recording optical beam L2c with the wavelength of 405 to 406 nm and the optical power of 55 mW to the target position via the objective lens 13 whose numerical aperture is 0.3.

As shown in FIG. 6B, when reading out information from the optical information recording medium 100, the optical information recording and reproducing device 5 focuses the reading optical beam L2d emitted from the recording and reproducing beam source 10 (FIG. 5) on a point inside the recording layer 101. In this case, by controlling the position of the optical pickup 7 (FIG. 5) in X, Y, and Z directions, the optical information recording and reproducing device 5 focuses the reading optical beam L2d (FIG. 6B) on the target position inside the recording layer 101.

At this time, the recording and reproducing beam source 10 of the optical information recording and reproducing device 5 emits the reading optical beam L2d whose wavelength is the same as that of the recording optical beam L2c and whose optical power is 200 $\mu$W or 1.0 mW. The objective lens 13 focuses the reading optical beam L2d on the target position where the recording mark RM is formed inside the recording layer 101.

At this time, the reading optical beam L2d is reflected by the recording mark RM, thereby becoming the returning optical beam L3. The photodetector 17 (Charge Coupled Device (CCD)) of the optical information recording and reproducing device 5 receives and detects the returning optical beam L3 via the objective lens 13, the beam splitter 12, and the like.

Moreover, the optical information recording and reproducing device 5 emits the recording optical beam L2C with the wavelength of 405 nm and the optical power of 55 mW to the Sample S1's target position via the objective lens 13 whose numerical aperture NA is 0.3 for 0.6 seconds. After that, the optical information recording and reproducing device 5 emits the reading optical beam L2d with the same wavelength of 405 nm and the optical power of 1.0 mW to the Sample 1's target position via the objective lens 13 whose numerical aperture NA is 0.3.

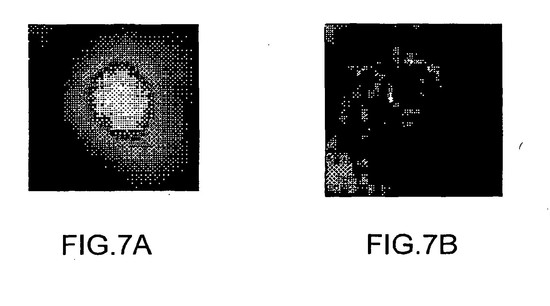

At this time, as shown in FIG. 7A, the photodetector 17 can detect the returning optical beam L3 because its intensity is strong enough. This intensity is regarded as reference intensity, and other Samples S1 to S8 are checked as to whether the returning optical beam L3 is detected or not, hereinafter.

On the other hand, if the reading optical beam L2d is similarly emitted to the target position which has not been exposed to the recording optical beam L2c, the photodetector 17 can hardly detect the returning optical beam L3, as shown in FIG. 7B.

Incidentally, the Sample S1's photoinitiator is excited after absorbing light whose wavelength is between ultraviolet and visible light (1 nm to 550 nm), generating radical which works as a starter of photopolymerization. Accordingly, the photoinitiator has the characteristics that it absorbs ultraviolet beams. The same could be said for the other initiators of Samples S2 to S8.

The wavelength of the recording optical beam L2c is 405 to 406 nm. Even though it is visible light, the recording optical beam L2c is close to ultraviolet light. Therefore, it is considered that DARCUR1173, which is used for Sample S1, heats up by absorbing the recording optical beam L2c inside the recording layer 101, exceeds the vaporization temperature, and vaporizes; as a result, an air bubble, or a recording mark RM, is formed.

In many cases, a photopolymer contains a lot of double bonds thanks to its structure. Generally, it is known that the double bond absorbs ultraviolet light. That is, it is considered that the photopolymers heat up by absorbing the recording optical beam L2c, and convey this heat to the photoinitiators; as a result, the photoinitiators heat up, and therefore vaporize.

Moreover, the optical information recording and reproducing device 5 emits the recording optical beam L2c (DC output) with the wavelength of 405 to 406 nm and the optical power of 20 mW to the target position of each of Samples S1 to S8 via the objective lens 13 whose numerical aperture NA is 0.3 for 10 seconds. After that, the optical information recording and reproducing device 5 emits the reading optical beam L2d with the same wavelength of 406 nm and the optical power of 1.0 mW via the objective lens 13 whose numerical aperture NA is 0.3.

In this case, each time the optical information recording and reproducing device 5 changes the target position, it increments the emission time of the recording optical beam L2c by 0.05 seconds in the range of 0.05 to 10.0 seconds.

And the optical information recording and reproducing device 5 emits the reading optical beam L2d to the target position, and detects the returning optical beam L3 by the photodetector 17. The optical information recording and reproducing device 5 recognizes the emission time periods during which the intensity detected by the photodetector 17 is greater than or equal to the reference intensity, and regards the shortest emission time period as a recording time.

A table 2 shows recording times of Samples S1 to S8, types of photoinitiators for each Sample, vaporization temperatures, and blending ratios. Incidentally, mark "$\times$" means that the photodetector 17 does not detect the returning optical beam L3 whose intensity is greater than or equal to the reference intensity even though the reading optical beam L2d is emitted to the target position which has been exposed to the recording optical beam L2c for 10 seconds:

Table 2

| Sample No. | Photoinitiator | Vaporization Temperature (deg C) | Ratio (wt%) | Recording Time (sec) |
|---|---|---|---|---|
| S1 | DAROCUR1173 | 147 | 1.0 | 0.45 |
| S2 | Irg-184 | 192 | 1.0 | 0.5 |
| S3 | Irg-784 | 232 | 1.0 | 0.45 |
| S4 | Irg-907 | 247 | 1.0 | 0.3 |
| S5 | Irg-369 | 282 | 1.0 | 0.5 |
| S6 | SCTP | 394 | 1.0 | 0.8 |
| S7 | X-32-24 | 532 | 1.0 | x |
| S8 | UVX4 | >600 | 1.0 | x |

By the way, the vaporization temperatures of the photoinitiators used for Samples S1 to S8 are the result of measurement by TG/DTA (simultaneous thermogravimetry-differential thermal analysis) under the following condition. The vaporization temperature is a temperature where the greatest weight loss occurs as for TG curved line.
Ambient atmosphere: $N_2$ (under a nitrogen atmosphere)
Rate of temperature increase: 20 deg C per minute
Measured temperature: between 40 and 600 deg C
Using device: TG/DTA300 (Seiko Instruments Inc.)

Incidentally, if a measured object has a plurality of vaporization temperatures, the lowest one where the greatest weight loss occur's is regarded as its vaporization temperature. As for UVX4, the dramatic weight loss was not observed within the range of measurement (between 40 and 600 deg C). Accordingly, the table shows that its vaporization temperature is greater than 600 deg C.

According to the result of measurement, when Samples S1 to S6 whose photoinitiators' vaporization temperatures are between 147 and 394 deg C are used, the returning optical beam L3 whose intensity is greater than or equal to the reference intensity is detected during the recording time of less than 1 second (0.2 to 0.8 second). Accordingly, it is confirmed that the recording mark RM is formed at the target position.

On the other hand, when Sample S7 or S8 whose photoinitiator' vaporization temperature is 532 or more than 600 deg C is used, the returning optical beam L3 whose intensity is greater than or equal to the reference intensity is not detected by the photodetector 17 even if the reading optical beam L2d is emitted to the target position which was exposed to the recording optical beam L2c for 10 seconds. Accordingly, it is confirmed that the recording mark RM is not formed at the target position.

Accordingly, it could be considered that, if the photoinitiator used has a low vaporization temperature, the photoinitiator residues heats up and reaches or exceeds the vaporization temperature around the focal point Fb of the emitted recording optical beam L2c, and the vaporization of the photoinitiator residues creates the recording mark RM. On the other hand, it could be considered that, if the photoinitiator used has a high vaporization temperature, the photoinitiator residues does not vaporize because it does not reach the vaporization temperature, and is therefore unable to create the recording mark RM.

Incidentally, even when a picosecond laser that would trigger multi-photon absorption including two-photon absorption, instead of the recording and reproducing beam source 10, emits a pulsed recording optical beam L2c of 5 psec whose wavelength and average output power are respectively 780 nm and 43 mW to each Sample S1 to S8, the measured recording times are substantially the same. This means that the recording layer 101 does not include materials of multi-photon absorption.

Here, even when Sample S6 whose photoinitiator's vaporization temperature is 394 deg C is used, the recording mark RM is formed in 0.8 seconds. Accordingly, if the recording optical beam L2c is allowed to be emitted for up to 1 second, the recording mark RM can be formed when the photoinitiator's vaporization temperature is about less than 400 deg C.

Moreover, the vaporization of the photoinitiator residues occur due to the heat generated by the recording optical beam L2c, and the use of the photoinitiators whose vaporization temperatures are low means the shorter recording time than when the photoinitiators whose vaporization temperatures are high are used. Accordingly, it is considered that the photoinitiators having lower vaporization temperatures make it easy to form the recording mark RM.

However, according to the measurement of TG/DTA, even if DAROCUR1173 whose vaporization temperature is 147 deg C is used, endoergic reaction gradually starts around 90 deg C, which is about 60 deg C below the vaporization temperature. This means that, if the sample including DAROCUR1173 is left for a long time under conditions of 90 deg C, the photoinitiator residues gradually vaporize; no photoinitiator residues may be left when a process of forming the recording mark RM starts. This means that, even if the recording optical beam L2c is emitted, the recording mark RM may not be formed.

Generally, electronic devices, including the optical information recording and reproducing device 5, are supposed to be used under conditions of 80 deg C. Accordingly, to secure the temperature stability of the optical information recording medium 100, the photoinitiator whose vaporization temperature is greater than or equal to 140 deg C (80 deg C + 60 deg C) should be used. If the photoinitiator whose vaporization temperature is greater than or equal to 145 deg C (5 deg C higher) is used, the temperature stability may increase.

Accordingly, the vaporization temperature of the photoinitiator that is mixed with the fluid material M1 should be between 140 and 400 deg C, preferably between 145 and 300 deg C.

The amount of the photoinitiator that is mixed with the fluid material M1 should be 0.8 to 20.0 parts by weight with respect to 100 parts by weight monomers, preferably 2.5 to 20 parts by weight: this helps promote photopolymerization and prevents such bad effects as a decrease in elastic modulus of the recording layer 101 due to the excessive presence of the photoinitiator residues.

### (1-5) Operation and Effect

As described above, the recording layer 101 of the optical information recording medium 100 contains the photoinitiator residues, or the photoinitiators whose vaporization temperature is greater than or equal to 140 deg C and less than or equal to 400 deg C.

Accordingly, on the recording layer 101, when the recording optical beam L2c, which is a predetermined recording beam, is focused during the information recording process, the photoinitiator residues around the focal point Fb of the recording optical beam L2c heat up, and therefore vaporize. As a result, a cavity, or the recording mark RM, is formed.

Accordingly, when the reading optical beam L2d, which is a predetermined reading beam, is emitted during the information reproducing process, whether the recording mark RM exists or not is detected after the returning optical beam L3, which is a returning beam reflected from the recording mark RM, is received, allowing the information to be reproduced from the returning beam.

That is, as for an existing optical information recording medium that makes use of the characteristics of two-photon absorption regarding a pigment, the following material and component may be necessary to from a multilayered medium: a special dye material that has a high transmissivity to the reproducing wavelengths but a low transmissivity to the more than doubled wavelengths, and a high-power femtosecond or picosecond laser that is large and consumes much energy. By contrast, as for the optical information recording medium 100, just focusing an ordinary optical laser beam from a laser diode on the optical information recording medium 100 forms the air-bubble recording marks RM, allowing the optical information recording and reproducing device 5 to be simple and energy-efficient.

The recording layer 101 is an ultra-violet curable resin: the fluid material M1 containing the monomers including at least a monomer or an oligomer and the photoinitiators gets solidified due to photopolymerization or photocrosslinking caused by the emission of the initialization beam L1.

Here, the photoinitiator only serves as an initiator to start the polymerization of the fluid material M1 by generating radical and cation. Accordingly, about 0.01 to 0.1 parts by weight photoinitiator with respect to 100 parts by weight monomers (i.e. the amount of the photoinitiator is about between 0.01 and 0.09 percent of the total weight of the recording layer 101) are theoretically enough to solidify the monomers into photopolymer (if the emission time of the initialization beam L1 is enough (10 hours, for example) without taking into consideration the reaction speed and the like).

As for the fluid material M1, the photoinitiator is excessively added to the monomers. Accordingly, the photoinitiators are left in the recording layer after the solidifying process, and the reaction speed of the optical reaction increases.

### (2) Embodiment

### (2-1) Configuration of Embodiment

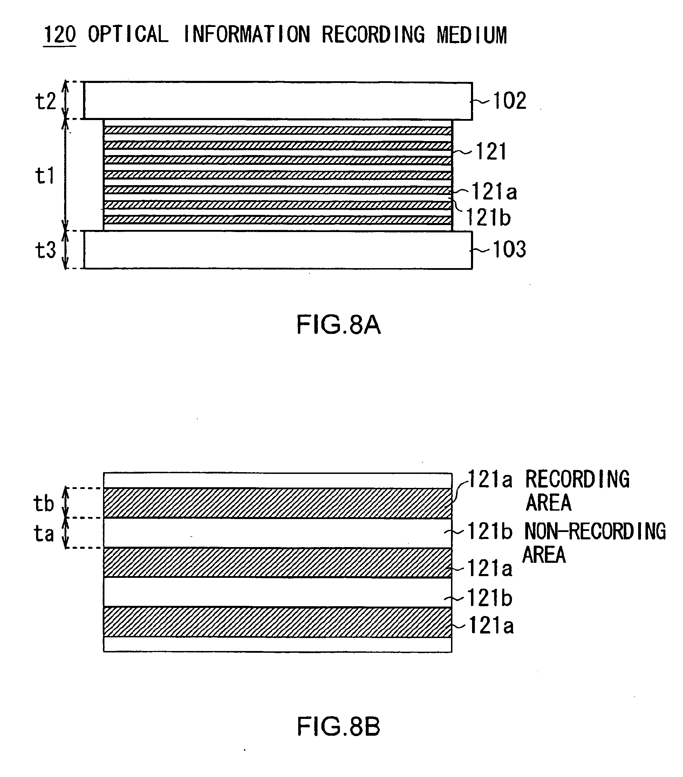

FIGS. 8 to 17 illustrate an embodiment, and their parts have been designated by the same reference symbols as the corresponding parts of FIGS. 1 to 7 that illustrate the example useful for understanding the invention. The example embodiment's recording layer 121 differs from the example's recording layer 101. The embodiment's optical information recording and reproducing device 5 has the same configuration as that of the example, and therefore its description is omitted.

As shown in FIG. 8A, an optical information recording medium 120 has the recording layer 121 between base plates 102 and 103. The recording layer 121 includes recording areas 121a and anon-recording areas 121b: the recording mark RM is recorded on the recording areas 121a after the emission of the recording optical beam L2c, while no recording mark RM is recorded on the non-recording area 121b. The recording areas 121a and the non-recording areas 121b appear alternately in a direction of the thickness (i.e. Z direction).

The number of the recording areas 121a and the non-recording areas 121b can be any value: each of them may have as much as 20 layers. The number of layers may be determined based on the capacity of the optical information recording medium 120, the light absorption rate of the recording areas 121a or the non-recording areas 121b to the recording optical beam L2c or the reading optical beam L2d.

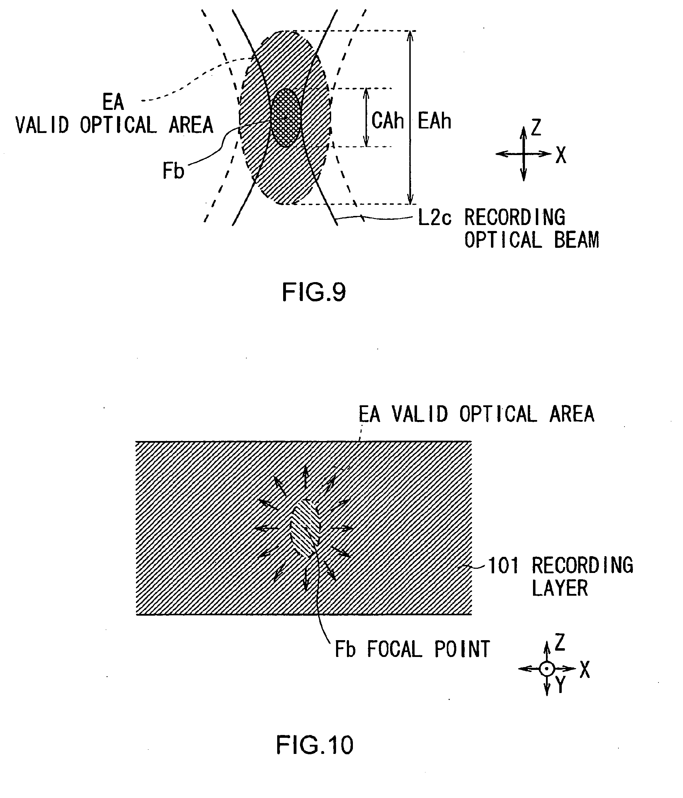

By the way, as shown in FIG. 9, thanks to the effect of the objective lens 13 (FIG. 5), the light intensity of the recording beam L2c has a maximum value at the focal point Fb; as it moves away from the focal point Fb, the light intensity gradually decreases.

Here, assume that the wavelength of the recording optical beam L2c is $\lambda$, the numerical aperture of the objective lens 13 that converges the recording optical beam L2c is NA, and the refractive index of the recording layer 121 is n. When the light intensity of the recording optical beam L2c with respect to the light intensity of the focal point Fb is regarded as $1/e^2$, the height CAh in Z direction can be represented as follows:

$$\mathrm{CAh} = \frac{2\lambda}{n\pi} \times \left\{ \frac{1}{\tan(\sin^{-1} - (NA/n))} \right\}^2 \qquad \cdots\cdots (2)$$

In reality, even the outer circumference of the recording optical beam L2c, beyond the height CAh, has a detectable light intensity, and this could produce heat (referred to as "recording beam heat", hereinafter) as a result of the emission of the recording optical beam L2c to the recording area 121a. A valid height EAh of an area where the recording beam heat could occur is assumed to be three times the height CAh.

For example, if the refractive index n of the recording layer 121 is 1.52, the height CAh is 4.2 $\mu$m while the valid height EAh is 12. 6 $\mu$m, because the objective lens 13's numerical aperture NA is 0.3 and the wavelength $\lambda$ of the recording optical beam L2c is 405 nm.

The recording area 121a is formed so that its thickness ta become less than or equal to the vaLid height EAh:

$$\mathrm{ta} \leqq 3 \times \frac{2\lambda}{n\pi} \times \left\{ \frac{1}{\tan(\sin^{-1} - (NA/n))} \right\}^2 \qquad \cdots\cdots (3)$$

Moreover, for example, the height tb (FIG. 8B) of the non-recording area 121b is around 0.1 to 10 times the height ta of the recording area 121a in order to prevent the recording marks RM formed inside the recording areas 121a from being too close to each other.

The fluid material M1, from which the recording areas 121a are produced, is the same as that of the above-noted example.

A non-recording material M2, from which the non-recording areas 121b are produced, may be chosen from various materials: various types of fluid resin or solid resin such as ultra-violet curable resins including the fluid material M1, soluble resins that can dissolve in various fluxing materials, hot-melt resins that melt in the heat, thermosetting resins that get solidified in the heat; and optical inorganic materials such as glass. Moreover, as for the non-recording material M2, the one having a high transmissivity to the recording optical beam L2c or the reading optical beam L2d may be chosen as the non-recording area 121b.

Here, as shown in FIG. 10, as for the example's recording layer 101, since there is no limitation on the diffuse direction of the recording beam heat, the recording beam heat is diffused in a three-dimensional way, or in X, Y and Z directions. As a result, on the recording layer 101, the focal point Fb and the surrounding area would lose heat, and a sharp increase in temperature may not be observed.

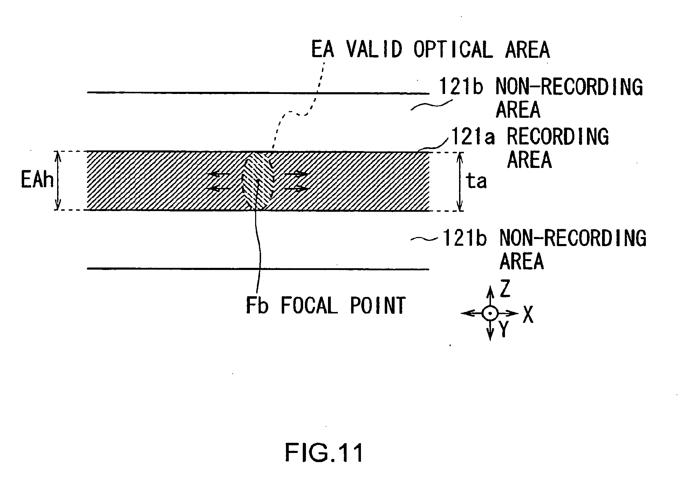

As shown in FIG. 11, in the present embodiment's recording layer 121, the non-recording area 121b restricts the diffusion of the recording beam heat in Z direction, swiftly raising the temperature around the focal point Fb. This reduces the recording time required to from the recording mark RM.

Specifically, an affinity between the recording area 121a and the non-recording area 121b is reduced, or the glass transition point Tg of the non-recording area 121b and the glass transition point Tg of the recording area 121a are raised. First, a method of decreasing the affinity between the recording area 121a and the non-recording area 121b is described below.

Generally, resins can be classified according to the degree of the polar characters: low-polarity resins, high-polarity resins, resins that swell by absorbing water, and high hydrophilic resins.

The low-polarity resin may be polyolefin resin, cycloolefin resin, and norbornene resin. The high-polarity resin may be polyamide-imide resin, acrylate resin, epoxy resin, urethane resin, and polystyrene resin. The high hydrophilic resin may be polyvinyl alcohol resin.

As for the recording layer 121, if the polar character of the non-recording area 121b is totally different from that of the recording area 121a, the affinity between the recording area 121a and the non-recording area 121b is low. Accordingly, this prevents some elements of the recording area 121a, which heat up due to the recording beam heat, from being transferred to inside the non-recording area 121b.

As a result, the non-recording area 121b does not lose heat in Z direction, and can retain the recording beam heat around the focal point Fb. Therefore, the temperature around the focal point Fb sharply increases, and thereby the recording time can be reduced.

In this case, since the resin of the recording area 121a is different from that of the non-recording area 121b, the affinity between the recording area 121a and the non-recording area 121b can be reduced relatively easily thanks to the difference in structure.

Incidentally, the resins are classified based on their type of polar group when they are being solidified. If the fluid material M1 contains more than two resins, the recording area 121a, which is produced from the fluid material M1, shall belong to the same category as the resin whose amount is greater than the others.

The following describes how to raise the glass transition point Tg of the non-recording area 121b and the glass transition point Tg of the recording area 121a.

Generally, it is known that molecular movements start at a temperature of less than 30 deg C less than the glass transition point TG.

For example, the glass transition point Tg of the non-recording area 121b is 30 deg C or more higher than that of the recording area 121a. Accordingly, even if the temperature of the recording area 121a exceeds the glass transition point Tg after the emission of the recording optical beam L2c, molecular movements do not occur at the non-recording area 121b, restraining the conduction of heat from the recording area 121a.

In this manner, as for the non-recording area 121b, the difference in glass transition point can keep the elements heated by the recording beam heat from being transferred to the non-recording area 121b, as the difference in polar character between the non-recording area 121b and the recording area 121a does. Accordingly, the temperature around the focal point Fb sharply increases, and the recording time can be reduced.

Incidentally, the thickness ta of the recording area 121a is preferably less than or equal to the valid height EAh. This can prevent the recording beam heat from dispersing through the recording layer 121a; the non-recording area 121b can help the recording layer 121 effectively retain the recording beam heat.

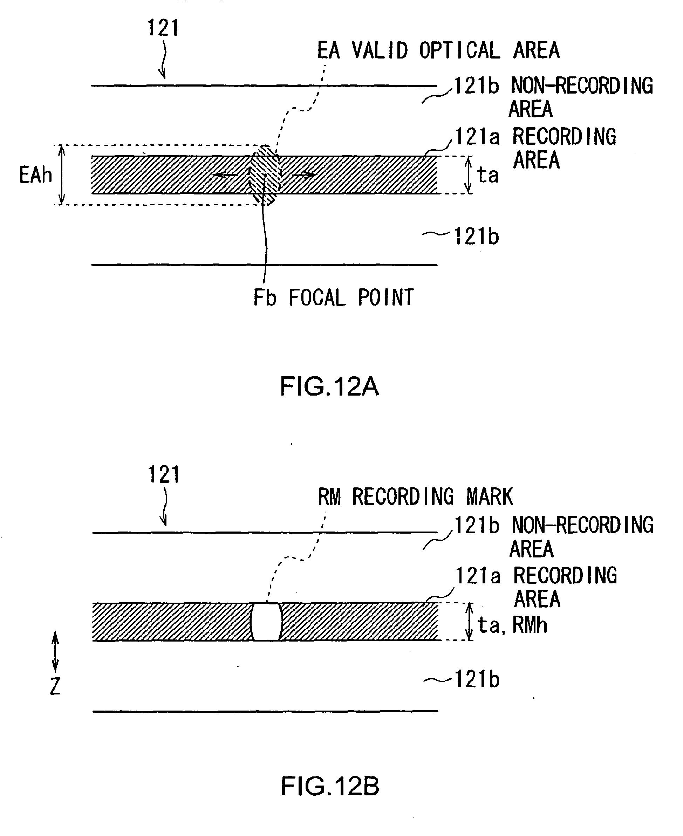

Moreover, as shown in FIG. 12A, as for the recording layer 121, the thickness ta of the recording area 121a is less than the valid height EAh. Accordingly, the recording area 121a is exposed to the high-energy portion of a valid optical area EA.

Especially, the thickness ta of the recording area 121a is preferably less than or equal to the height CAh:

$$ta \leqq \frac{2\lambda}{n\pi} \times \left\{ \frac{1}{\tan(\sin^{-1} - (NA/n))} \right\}^2 \qquad \cdots\cdots (4)$$

As a result, the recording area 121a of the recording layer 121 can effectively retain the recording optical heat, whose energy is high and which is produced swiftly. Accordingly, the temperature around the focal point Fb increases sharply and the recording mark RM is produced swiftly.

In this case, as shown in FIG. 12B, the recording mark RM is formed only inside the recording area 121a of the recording layer 121. Accordingly, the height RMh of the recording mark RM is kept low, increasing the recording density in a direction of the thickness of the recording layer 121 (Z direction).

The following describes an example of how to produce the optical information recording medium 120.

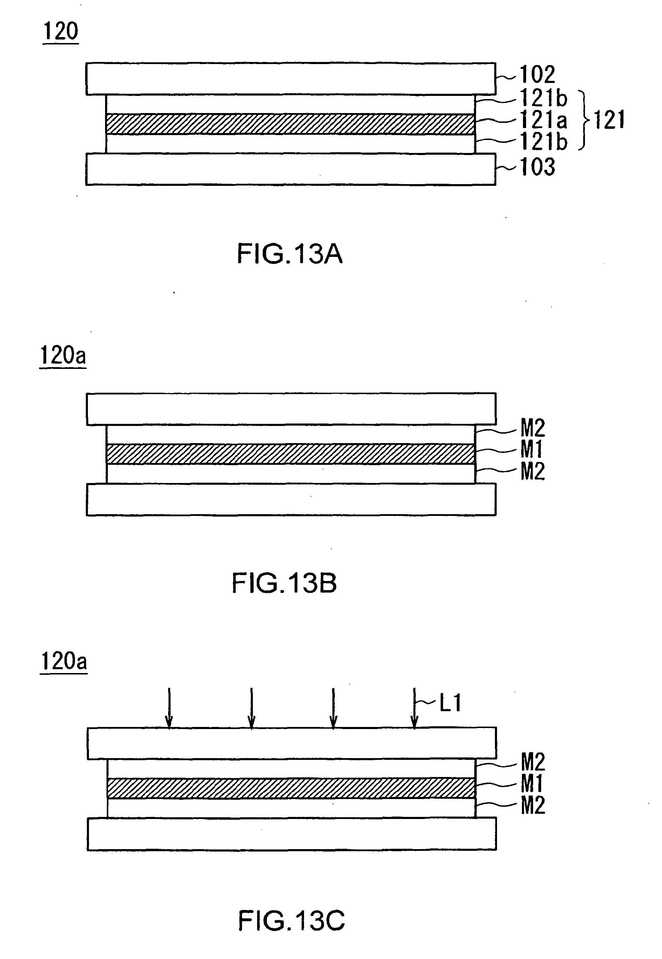

First, a case in which the recording area 121a is photopolymer is described. For ease of explanation, as shown in FIG. 13A, the following describes the three-layer recording layer 121: the recording area 121a is sandwiched between two non-recording areas 121b.

As shown in FIG. 13B, after the non-recording material M2, which is an ultra-violet curable resin, is spread over the base plate 103 by the spin coat method, the squeegee method or the like, the fluid material M1 is spread over the non-recording material M2, and finally, the non-recording material M2 is spread over the fluid material M1. And the base plate 102 is put on the non-recording material M2. In this manner, an uncured optical information recording medium 120a is produced: there are the fluid material M1 and the non-recording material M2 between the base plates 102 and 103.

After that, as shown in FIG. 13C, the initialization beam source 2 emits the initialization beam L1 to the uncured optical information recording medium 120a to solidify the fluid material M1 and the non-recording material M2 by the optical reaction, thereby producing the optical information recording medium 120.

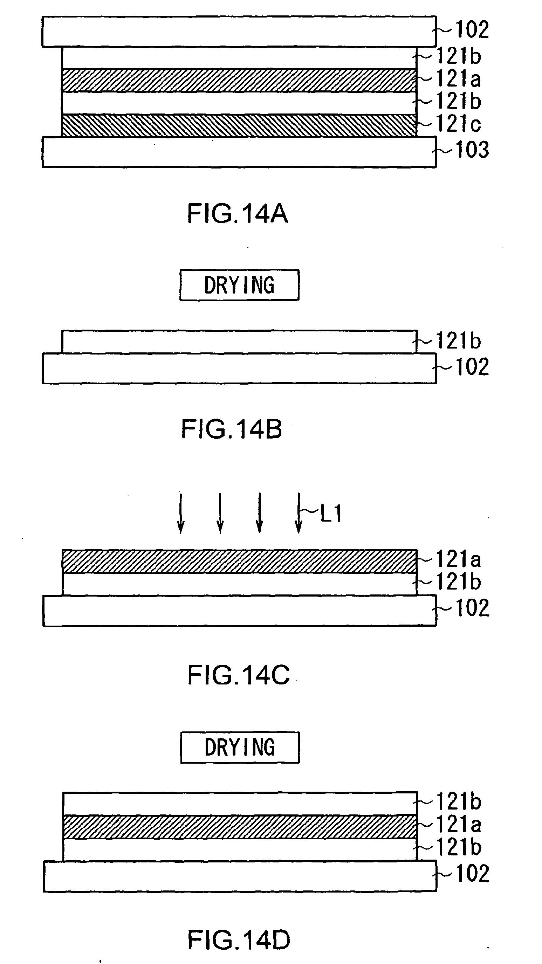

The following describes a case in which the recording area 121a is a diluted resin, a resin diluted by a diluent solvent, by using, for ease of explanation, FIG. 14A: the recording layer 121 is produced by combining the non-recording area 121b and the base plate 103 through an adhesive area 121c.

As shown in FIG. 14B, the non-recording material M2 is spread over the base plate 102, the diluent solvent is vaporized by thermal drying, and therefore the non-recording area 121b is formed. Moreover, as shown in FIG. 14C, the fluid material M1 is spread over the non-recording area 121b, and the initialization beam L1 is emitted to form the recording area 121a. After that, the non-recording material M2 is spread over the recording area 121a, and the non-recording area 121b is formed by thermal drying.

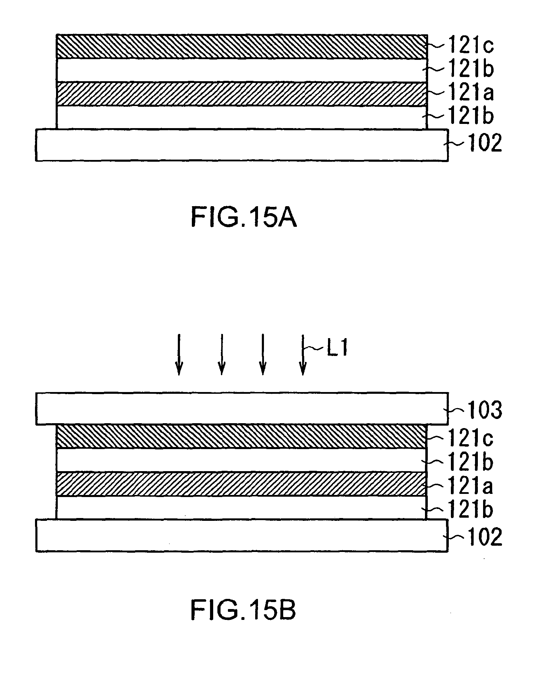

And as shown in FIG. 15A, an adhesive material M3, which is an ultra-violet curable resin, is spread over the non-recording area 121b, the base plate 103 is then put on the adhesive material M3, and the initialization beam L1 is emitted (FIG. 15B) to form the optical information recording medium 120.

Incidentally, the fluid material M1 may be produced by combining the ultra-violet curable resin and the thermosetting resin. In this case, the thermosetting monomers and a curing agent are previously combined and heated to be solidified. After that, the ultra-violet curable resin is added, and the ultra-violet curable resin is solidified by the optical reaction. Alternatively, after the thermosetting resin and the ultra-violet curable resin are combined, the thermosetting resin may be cured in ambient temperature, and then the ultra-violet curable resin may be solidified by the optical reaction.

Moreover, a sheet-like solid material with a predetermined thickness can also be used as the non-recording material M2. In this case, the adhesive area 121c is provided on the base plate 102, and the base plate 102 and the non-recording area 121b are adhered to each other. If the base plate 102 or 103 can serve as the non-recording area 121b, the recording area 121a can be provided adjacent to the base plate 102 or 103.

The production method of the optical information recording medium 120 is not limited to the above methods. The same optical information recording medium 120 can be produced by other production methods.

(2-2) Practical Example

Under the following condition, Prepared Resins R1 to R10 are prepared as the fluid material M1.

Prepared Resins R1 and R2 are prepared by diluting a polymer with toluene to a predetermined concentration, adding the 2 parts by weight of Irg-184 (photoinitiator) to the 98 parts by weight of the polymer, and mixing and defoaming them under a dark room.

Prepared Resins R3 to R5 and R10 are produced by adding Irg-184 or Irg-784 (photoinitiator) to the monomers, and mixing and defoaming them under a dark room.

Moreover, Prepared Resin R6 is produced by mixing and defoaming ultra-violet curable monomers, photoinitiators, thermosetting monomers and curing agents, and leaving them for 10 hours in ambient temperature (25 deg C). As a result, the thermosetting monomer, or SR-GLG, and the curing agent, MH-700, get solidified.

Prepared Resins R21 to R23, which are the non-recording material M2, are prepared by diluting a polymer with a diluent solvent to a predetermined concentration, and mixing and defoaming them under a dark room: the diluent solvent for Prepared Resins R21 and R22 is purified water, while the diluent solvent for Prepared Resin R23 is xylene/butanol mixture.

A table below shows the blending quantities of Prepared Resins R1 to R23 and the materials of Prepared Resins R1 to R23:

Table 3

|  | R1 | R2 | R3 | R4 | R5 | R6 | R10 | R21 | R22 | R23 |
|---|---|---|---|---|---|---|---|---|---|---|
| D4532 | 98 | - | - | - | - | - | - | - | - | - |
| MT5 | - | 98 | - | - | - | - | - | - | - | - |
| S2EG | - | - | 97 | 91 | 77 | - | 77 | - | - | - |
| HX-620 | - | - | - | - | 20 | 30 | - | - | - | - |
| SR-GLG | - | - | - | - | - | 26 | - | - | - | - |
| MH-700 | - | - | - | - | - | 32 | - | - | - | - |
| OXT-121 | - | - | - | - | - | 10 | - | - | - | - |

(continued)

| | R1 | R2 | R3 | R4 | R5 | R6 | R10 | R21 | R22 | R23 |
|---|---|---|---|---|---|---|---|---|---|---|
| DPCA-60 | - | - | - | - | - | - | 20 | - | - | - |
| RS-2117 | - | - | - | - | - | - | - | 100 | - | - |
| AL-06R | - | - | - | - | - | - | - | - | 100 | - |
| HR-15ET | - | - | - | - | - | - | - | - | - | 100 |
| Irg-184 | 2 | 2 | 3 | 9 | 3 | - | 3 | - | - | - |
| Irg-784 | - | - | - | - | - | 2 | - | - | - | - |
| Toluene | . | . | - | - | - | - | - | - | - | - |
| Xylene/Butanol | - | - | - | - | - | - | - | - | - | . |
| Purified water | - | - | - | - | - | - | - | . | . | - |

D5432: ARTON D4532, Norbornene Resin, JSR Corporation.
MT5: Polystyrene, TOYO STYRENE Co.,Ltd
S2EG: Methacrylate Resin (S,S (thiodiethylene)bis(thiomethacrylate)) Sumitomo Seika Chemicals Company Limited
HX-620: Acrylate Resin (bifunctional acrylic monomer), Nippon Kayaku Co., Ltd.
SR-GLG: Specialty Epoxy Resin (glycerin polyglycidyl ether), Sakamoto Yakuhin Kogyo Co., Ltd.
MH-700: RIKACID MH-700 epoxy resin hardeners (4-metyl hexahydrophthalic anhydride (HHPA)), New Japan Chemical Co., Ltd.
OHX-121: Specialty acrylic monomer (oxetane), TOAGOSEI CO., LTD.
DPCA-60: KAYARAD DPCA-60, acrylate resin, Nippon Kayaku Co., Ltd.
RS2117: EXCEVAL RS3117 polyvinyl alcohol resins, KURARAY CO., LTD.
AL-06R: GOHSENOL AL-06R, polyvinyl alcohol resins, The Nippon Synthetic Chemical Industry Co., Ltd.
HR-15ET: VYLOMAX HR-15ET, polyamideimide resin, TOYOBO CO., LTD.

(2-2-1) Practical Example 2

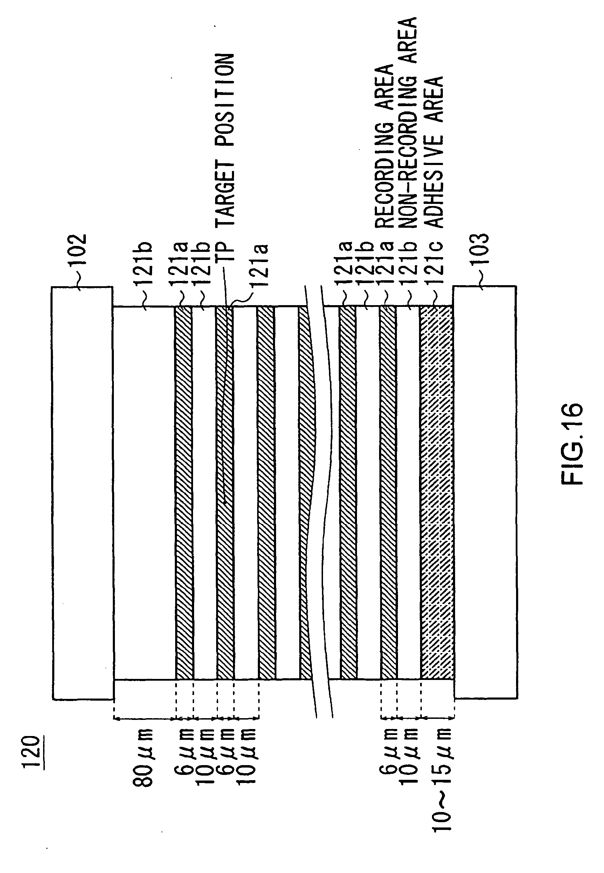

Under the following conditions, Samples S11 to S15 are produced as the optical information recording medium 120. As shown in FIG. 16, in Practical Example 2, the optical information recording medium 120 includes the base plates 102 and 103, and the recording layer 121 between the base plates 102 and 103 : the recording layer 121 includes 10 layers of recording areas 121a, 11 layers of non-recording areas 121b (the recording areas 121a and the non-recording areas 121b piles up such that they appears alternately), and the adhesive area 121c that adheres to both the non-recording area 121b which is the closest one to the base plate 103, and the base plate 103.

As for Sample S11, Prepared Resin R23 (as the non-recording material M2) is applied to a glass plate (base plate 102) whose thickness t2 is 0.7 mm by a solvent pulling method. After that, Prepared Resin R23 is dehydrated, and a dehydrated coating film (80 $\mu$m) is formed as the non-recording area 121b.

After that, Prepared Resin R1 (as the fluid material M1) is applied and dehydrated to form a dehydrated coating film as the recording area 121: the thickness ta of the dehydrated coating film is 0.6 $\mu$m, about 1.5 times the height CAh of the recording optical beam L2c. Subsequently, Prepared Resin R23 is applied and dehydrated to form a dehydrated coating film as the non-recording area 121b (10 $\mu$m). The formation of the recording area 121a and the non-recording area 121b is alternately performed, forming a total of 10 recording layers 121a and 11 non-recording areas 121b.

Moreover, Prepared Resin R3 (as the adhesive material M3) is applied to the coating film of Prepared Resin R1 with the thickness of 10 to 15 $\mu$m. After that, a glass plate (base plate 103) whose thickness t3 is 0.7 mm is put on it. Incidentally, in the other production cases described below (regarding Samples S22 to S58), the thickness t2 of the base plate 102 and the thickness t3 of the base plate 103 are the same.

Subsequently, the initialization beam source 2, which is a high-pressure mercury-vapor lamp, emits the initialization beam L1 (its wavelength is 365 nm, and its emission energy is 6 J/cm$^2$). As a result, Sample S11 is produced as the optical information recording medium 120.

As for Sample S2, Sample S12 is produced as the optical information recording medium 120 in the same way as that of Sample 11 except that Prepared Resin R2 is used as the fluid material M1 and that Prepared Resin R22 is used as the non-recording material M2.

Moreover, as for Sample R13, Prepared Resin R22 (as the non-recording material M2) is applied to the base plate 102 by the spin coat method, and a dehydrated coating film (80 $\mu$m) is formed as the non-recording area 121b.

Similarly, by the spin coat method, Prepared Resin R3 (as the fluid material M1) is applied with the thickness of 6 $\mu$m. Moreover, Prepared Resin R21 (as the non-recording material M2) is applied and dehydrated to form the non-recording area 121b (10-$\mu$m dehydrated coating film). The fluid material M1 and the non-recording area 121a are piled up alternately, forming a total of 10 layers of fluid material M1 and 10 layers of non-recording areas 121b.

Furthermore, to the coating film of Prepared Resin R1, Prepared Resin R3 (as the non-recording material M1) is applied with the thickness of 10 to 15 $\mu$m. After that, the base plate 103 is put on it. In the same way as that of Sample S11, the initialization beam L1 is then emitted, producing Sample S13 as the optical information recording medium 120.

Moreover, Samples S14 and S15 are produced as the optical information recording medium 120 in the same way as that of Sample 13 except that Prepared Resins R4 and R6 are used as the fluid material M1.

A table below shows a list of Prepared Resins used as the recording areas 121a and non-recording areas 121b of Samples S11 to S15 (in the table, PVOH represents a polyvinyl alcohol resin and polyvinyl alcohol resins):

Table 4

| Sample No. | Recording Area | Resin Type | Non-Recording Area | Resin Type |
|---|---|---|---|---|
| S11 | R1 | norbornene | R23 | polyamideimide |
| S12 | R2 | polystyrene | R22 | PVOH |
| S13 | R3 | methacrylate | R21 | PVOH |
| S14 | R4 | methacrylate | R21 | PVOH |
| S15 | R6 | acrylic | R21 | PVOH |

And, to a target position TP whose dept is 100 $\mu$m from a boundary between the recording layer 121 and the base plate 102 (i.e. the second layer of the recording area 121a from the base plate 102), the recording optical beam L2c is emitted by the optical information recording and reproducing device 5 in a similar way to Practical Example 1. As a result, the recording mark RM is formed. At this time, the recording sensitivity is measured.

The recording sensitivity represents a relative value of the recording optical beam L2c's emission energy (also referred to as "essential recording energy", hereinafter) required to form the recording mark RM. Specifically, the essential recording energy is calculated by multiplying the output light intensity of the recording optical beam L2c by the recording time required to form the recording mark RM.

Whether the recording mark RM has been formed or not is determined based on the following procedures: observing the target position of each sample by an optical microscope, confirming the presence of the explicit optical reflection in both bright field mode and dark field mode, observing in bright field mode or observing the cutting surface of the target position TP of each Sample by Scanning Electron Microscope (SEM), and then confirming whether a cavity has been formed.

(2-2-2) Comparison Example 1

Under the following conditions, Samples S21 to S25 are produced as the optical information recording medium 100. Incidentally, the fluid material M1 of Sample S21 to S25 is the same as that of Sample S11 to S15 of Practical Example 2.

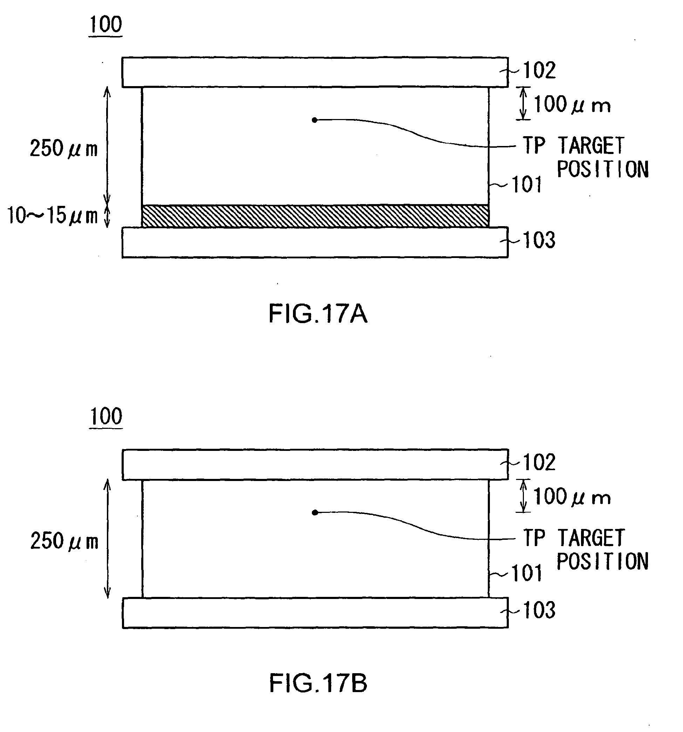

As shown in FIG. 17A, as for Sample S21, Prepared Resin R1 (as the fluid material M1) is applied to the base plate 102, and is dehydrated to form a dehydrated coating film (250 $\mu$m). After that, to the coating film of Prepared Resin R1, Prepared Resin R3 (as the adhesive material M3) is applied with the thickness of 10 to 15 $\mu$m, and the base plate 103 is put on it.

Subsequently, the initialization beam source 1, which is a high-pressure mercury-vapor lamp, emits the initialization beam L1 (its wavelength is 365 nm, and its emission energy is 6 J/cm$^2$). As a result, Sample S21 is produced as the optical information recording medium 100: this medium 100's recording layer 101 does not have the non-recording areas 121b.

As for Sample 22, Sample S22 is produced as the optical information recording medium 100 in the same way as that of Sample S21 except that Prepared Resin R2 is used as the fluid material M1.

As for Sample S23, a spacer whose thickness is 250 $\mu$m is put on the base plate 103, and is filled with Prepared Resin R3 (as the fluid material M1). After that, the base plate 102 is put on Prepared Resin R3. And the initialization beam source 1 emits the initialization beam L1 (its wavelength is 365 nm, and its emission energy is 6 J/cm$^2$) to produce Sample S23 as the optical information recording medium 100, as shown in FIG. 17B.

As for Samples S24 and S25, Samples S24 and S25 are produced as the optical information recording medium 100 in the same way as Sample S23 except that Prepared Resins R4 and R6 are used as the fluid material M1.

A table below shows a list of Prepared Resins used as the recording layers 101 of Samples S21 and S25:

Table 5

| Sample No. | Recording Layer | Resin Type |
|---|---|---|
| S21 | R1 | norbornene |
| S22 | R2 | polystyrene |
| S23 | R3 | methacrylate |
| S24 | R4 | methacrylate |
| S25 | R6 | acrylic |

Subsequently, in a similar way to Practical Example 1, the optical information recording and reproducing device 5 forms the recording mark RM at the target position TP whose depth is 100 μm from the base plate 102, and measures its recording sensitivity.

A table below shows a ratio of the recording sensitivity of Sample S11 to S15 of Practical Example 2 to that of Sample S21 to S25 of Comparison Example 1 (the ratio is referred to as "recording sensitivity ratio", hereinafter). Incidentally, as mentioned above, the fluid material M1 (prepared resin) of Sample S11 to S15 is the same as that of Sample S21 to S25.

Table 6

| Sample No. | Reference Sample No. | Prepared Resin | Recording Sensitivity Ratio |
|---|---|---|---|
| S11 | S21 | R1 | 0.010 |
| S12 | S22 | R2 | 0.001 |
| S13 | S23 | R3 | 0.060 |
| S14 | S24 | R4 | 0.012 |
| S15 | S25 | R6 | 0.050 |

According to the table 6, the recording sensitivity ratio of Sample S11 to S15 having the recording layers 121a and the non-recording layers 121b is less than 1. This means that the time required to form the recording mark RM is shorter even when the same emission energy of the recording optical beam L2c is emitted. That is, the recording sensitivity of Samples S11 to S15 is far better than that of Samples S21 to S25 whose recording layer 101 does not have the non-recording areas.

(2-2-3) Comparison Example 2

Under the following conditions, Samples S31 to S34 are produced as the optical information recording medium 120. In the same way as Practical Example 2, the optical information recording medium 120 of Comparison Example 2 includes the base plates 102 and 103, and the recording layer 121 between the base plates 102 and 103 : the recording layer 121 includes 10 layers of recording areas 121a, 11 layers of non-recording areas 121b (the recording areas 121a and the non-recording areas 121b pile up such that they appear alternately), and the adhesive area 121c that adheres to both the non-recording area 121b which is the closest one to the base plate 103, and the base plate 103.

As for Samples S31 to 34, Samples S31 to 34 are produced as the optical information recording medium 120 in the same way as that of Sample 13 of Practical Example 1 except that Prepared Resin R4 is used as the fluid material M1 and that Prepared Resin R3, R5, R10 or R2 is used as the non-recording material M2.

A table below shows a list of Prepared Resins used as the recording layers 121 of Samples S31 and S34. In Comparison Example 2, relatively high-polar resins are used as the fluid material M1 and the non-recording material M2.

Table 7

| Sample No. | Recording Area | Resin Type | Non-Recording Area | Resin Type |
|---|---|---|---|---|
| S31 | R4 | methacrylate | R3 | methacrylate |
| S32 | R4 | methacrylate | R5 | acrylic |
| S33 | R4 | methacrylate | R10 | acrylic |
| S34 | R4 | methacrylate | R2 | polystyrene |

A table below shows the ratio of the recording sensitivity of Sample S31 to S34 of Comparison Example 2 to that of Sample S24 of Comparison Example 1. Incidentally, the fluid material M1 of Samples S31 to 34 is the same as that of Sample S24.

Table 8

| Sample No. | Reference Sample No. | Recording Sensitivity Ratio |
|---|---|---|
| S31 | S24 | 1.00 |
| S32 | S24 | 0.63 |
| S33 | S24 | 0.67 |
| S34 | S24 | 0.71 |

In Samples S31 to S34, the recording areas 121a and the non-recording areas 121b are provided in a similar way to Practical Example 2. However, only a slight improvement in recording sensitivity has been achieved: a major improvement in recording sensitivity was not observed, compared with Sample S13 whose recording layer 101 does not have the non-recording areas. This may be attributable to the relatively low-polar prepared resins used as the fluid material M1 and the non-recording material M2.

Accordingly, it is confirmed that if the polar character of the recording area 121a is dramatically different from that of the non-recording area 121b, a major improvement in recording sensitivity can be achieved compared with the recording layer 100 that does not include the non-recording areas. Moreover, if the polar character of the recording area 121a is close to that of the non-recording area 121b, a major improvement in recording sensitivity may not be achieved compared with the recording layer 100 that does not include the non-recording areas.

Accordingly, it can be said that, as well as providing the recording areas 121a and the non-recording areas 121b, making the polar characters of the recording areas 121a and the non-recording areas 121b dramatically different from each other is important to improve the recording sensitivity.

(2-2-4) Practical Example 3

In Practical Example 3, Samples S51 to S58 are produced: the recording layers 101 of Samples S51 to 58 do not have the non-recording area. The measurement of the recording sensitivity is conducted by changing the target position and emitting the recording optical beam L2c.

As for Sample S52, a spacer whose thickness is 400 $\mu$m is placed on the base plate 103, and is filled with Prepared Resin R3 which is the equivalent of the fluid material M1. Subsequently, the base plate 102 is placed on Prepared Resin R3, and the initialization beam L1 is emitted from the initialization beam source 1. As a result, Sample S52 is produced as the optical information recording medium 100. When the initialization beam L1 is being emitted, Prepared Resin R3 gets completely solidified after the spacer is removed during the intermediate phase, reducing the deformation caused by shrinkage during a phase in which the resin gets completely solidified.

As for Samples S53 to S55, Samples S53 to S55 are produced as the optical information recording medium 100 in the same way as Sample S52 except that Prepared Resin R4, R5, or R10 is used as the fluid material M1.

As for Sample S51, Prepared Resin R2 (as the fluid material M1) is applied to the base plate 102, and is dehydrated to form a dehydrated coating film (350 $\mu$m). Subsequently, to the coating film of Prepared Resin R2, Prepared Resin R3 (as the adhesive material M3) is applied with the thickness of 50 $\mu$m, and the base plate 103 is placed on it. The initialization beam source 1, which is a high-pressure mercury-vapor lamp, emits the initialization beam L1 to produce Sample S51 as the optical information recording medium 100.

As for Samples S56 to S58, Samples S56 to S58 are produced as the optical information recording medium 100 in the same way as Sample S51 except that Prepared Resin R21, R22 or R23 is used as the fluid material M1.

And, in a similar way to Practical Example 2, the optical information recording and reproducing device 5 emits the recording optical beam L2c to target positions: the first target position is around a boundary between the recording layer 101 and the base plate 102 (within 5 μm of the boundary), the second is at depth of 100 μm from the boundary, and the third is at depth of 200 μm from the boundary. And the recording sensitivity, which represents the essential recording energy required to form the recording mark RM, is measured.

A table below shows a list of Prepared Resins used for Samples S51 to S58, and their measured recording sensitivity. Incidentally, the recording sensitivity is a relative value: the recording sensitivity of Sample S51 measured at depth of 200 μm from the boundary is regarded as 4.0.

Table 9

| Sample No. | Prepared Resin | Recording Sensitivity | | |
|---|---|---|---|---|
| | | Boundary | 100[μm] | 200[μm] |
| S51 | R2 | 0.02 | 0.9 | 4.0 |
| S52 | R3 | 0.06 | 0.7 | 2.2 |
| S53 | R4 | 0.06 | 0.8 | 3.8 |
| S54 | R5 | 0.02 | 0.6 | 1.2 |
| S55 | R10 | 0.02 | 0.1 | 2.0 |
| S56 | R21 | 2.0 | >20 | >20 |
| S57 | R22 | 2.0 | >20 | >20 |
| S58 | R23 | 2.0 | >20 | >20 |

According to the table 9, as for Sample S1, the recording sensitivity measured at depth of 200 μm is about four times worse than the recording sensitivity measured at depth of 100 μm: it is assumed that the emission energy of the recording optical beam L2c at depth of 200 μm is smaller than the emission energy at depth of 100 μm due to the absorption of the recording optical beam L2c by the recording layer 101.

In the case of Sample S51, there is a gap of 100 μm between the target positions. If only the difference in emission energy is taken into account, the recording sensitivity around the boundary (referred to as "boundary recording sensitivity", hereinafter) is considered to be about four times better than the recording sensitivity at depth of 100 μm. However, in reality, the boundary recording sensitivity has dramatically improved, about 45 times greater than the recoding sensitivity at depth of 100 μm.

This may be because the heat generated at the target position is retained at the boundary with the glass base plate 102. That is largely attributable to the higher glass transition point Tg of the glass (500 to 1000 deg C) than the glass transition point Tg of the general resin material (-50 to 300 deg C, for example). Incidentally, the difference in polar character may not affect it, even though the glass is a high polar material and its polar character is close to the high polar resin.

Moreover, according to the table 9, the boundary recording sensitivity of Samples S52 to S58 has also dramatically improved. That is, it is confirmed that, around the boundary with a material whose glass transition point Tg is high, the recording sensitivity improves dramatically compared with other places further away from the boundary.

Accordingly, the use of a material whose glass transition point Tg is high for the non-recording areas 121b of the optical information recording medium 120 can improve the recording sensitivity, and reduce the recording time (the time required to form the recording mark RM).

Moreover, when the target position is located at the boundary with the glass, the recording sensitivity has dramatically improved. Here, the one side of the target position is adjacent to the glass, but the other side is adjacent to the thick recording layer 101. Accordingly, if at least one side of the recording area 121a is adjacent to the non-recording area 121b, the recording sensitivity may improve.

In that manner, by comparing the boundary recording sensitivities (the boundary recording sensitivities are measured at the boundary with the chemically and physically stable glass), the recording sensitivity of Prepared Resins (in this case, the recording layer 121 is formed by piling up the recording areas 121a and the non-recording areas 121b) can be estimated, helping the selection of Prepared Resins.

(2-3) Operation and Effect

As described above, the recording area 121a of the recording layer 121 of the optical information recording medium 120 absorbs the recording optical beam L2c (which is a recording beam converged during recording of information) in accordance with the wavelength of the recording optical beam L2c, and therefore the area around the focal point heats up, leading to the formation of the recording mark RM, which is a cavity. When being exposed to the reading optical beam L2d (which is a predetermined reading beam for reproducing of information), the optically modulated returning optical beam L3 is generated. The information is reproduced from the returning optical beam L3.

Moreover, the non-recording area 121b of the recording layer 121 is provided adjacent to the recording area 121a. The non-recording area 121b prevents the heat generated around the focal point Fb by the emission of the recording optical beam L2c from dispersing.

Accordingly, the recording layer 121 can effectively use the emission energy of the recording optical beam L2c to raise the temperature around the focal point Fb. Therefore, the recording sensitivity of the recording area 121a improves; the recording time (the time required to form the recording mark RM) can be reduced, increasing the recording speed.

In the recording layer 121, the recording area 121a is sandwiched in between the non-recording areas 121b.

In this manner, in the recording layer 121, the non-recording areas 121b that can improve the recording sensitivity are provided on both sides of the recording layer 121a. Accordingly, the recording speed is faster than when the non-recording area 121b is provided only on one side of the recording area 121a.

The recording layer 121 has a plurality of recording areas 121a; the non-recording areas 121b and the recording areas 121a pile up so that they appear alternately.

Accordingly, in the recording layer 121, even when there is a plurality of recording areas 121a, each recording area 121a is sandwiched in between the non-recording areas 121b, and the non-recording areas 121b, provided on both sides of the recording area 121a, can help improve the recording sensitivity.

The recording layer 121 prevents the heat generated around the focal point Fb by the emission of the recording optical beam L2c that strikes the recording area 121a from dispersing through the non-recording area 121b. Therefore, the temperature increases rapidly and therefore the recording mark RM is formed swiftly.

In the recording layer 121, the non-recording area 121 has a low affinity for the recording area 121a.

Accordingly, the recording layer 121 can prevent, when the temperature around the focal point Fb rises, low-molecular elements of the recording area 121a from moving into the non-recording area 121b, and thereby prevents the conduction of heat to the non-recording area 121b. As a result, the recording layer 121 keeps the heat generated around the focal point Fb within the recording area 121a, and therefore efficiently raises the temperature around the focal point Fb. Accordingly, the recording mark RM is formed swiftly.

In the recording layer 121, a different material from that of the recording area 121a is used to produce the non-recording area 121b, efficiently reducing an affinity of the recording area 121a for the non-recording area 121b.

The glass transition point Tg of the non-recording area 121b is higher than that of the recording area 121a. This prevents, when the temperature around the focal point Fb rises, the low-molecular elements of the recording area 121a from moving into the non-recording area 121b, and thereby prevents the conduction of heat to the non-recording area 121b.

According to the above configuration, the recording layer 121 includes the non-recording area 121b which is adjacent to the recording area 121a on which the recording mark RM is formed after the recording optical beam L2c is emitted, and which is made from a different material from that of the recording area 121a, and which does not form the recording mark RM even after the recording optical beam L2c is emitted. Accordingly, the essential recording energy, the energy required to form the recording mark RM, can be reduced. Thus, the optical information recording medium that can increase the recording speed can be realized.

(3) Another example

In the another example, an increase in temperature around the focal point. Fb after the emission of the recording optical beam L2c induces a thermosetting reaction, changes the refractive index around the focal point Fb, and forms the recording mark RM. Incidentally, since the initialization beam source 2, optical information recording and reproducing device 5 and optical information recording medium 120 of the another example has the same configuration as those in the embodiment, their description is omitted.

A recording layer 121X (not shown) of the optical information recording medium 120 contains, in addition to ultra-violet curable monomers and photoinitiators, thermosetting monomers and curing agents (these thermosetting monomers and curing agents are collectively referred to as "thermosetting elements", hereinafter) as the uncured fluid material M1 used for the recording area 121a.

Accordingly, in the recording layer 121X, after the recording optical beam L2c is emitted to the recording area 121a, the temperature around the focal point Fb rises. As a result, the thermosetting elements polymerize and get solidified. At this time, in the recording layer 121X, due to the polymerization of the thermosetting elements, the refractive index around the focal point Fb changes, and the change of refractive index can be regarded as the recording mark RM.

(3-1) Practical Example 4

Under the following conditions, Samples S41 and S42 are produced as the optical information recording medium 120 whose configuration is the same as that of Practical Example 2; Samples S43 and S44 are produced as the optical information recording medium 100 whose configuration is the same as that of Comparison Example 1.

In the same way as Practical Example 2, Prepared Resin R1 is prepared. In the same way as Prepared Resin R6 of Practical Example 2, Prepared Resins R7 and 8 are prepared. A table below shows the composition of Prepared Resins R1, R7 and R8:

Table 10

|  | R1 | R7 | R8 |
|---|---|---|---|
| D4532 | 98 | - | - |
| S2EG | - | 30 | - |
| SR-GLG | - | 30 | 28 |
| MH-700 | - | 38 | 36 |
| SX | - | 1 | 5 |
| M-350 | - | - | 30 |
| Irg184 | 2 | 1 | 1 |
| toluene | . | - | - |
| SX: "CELUMAIKU SX" in Japanese, P, P-oxybisbenzenesulfonylhydrazide, SANKYO KASEI CO., LTD.<br>M-350: acrylate resin, EO (ethylene oxide) modified trimethylolpropane tryacrylate, TOAGOSEI CO., LTD. | | | |

As for Samples S41 and S42, Samples S41 and Samples S42 are produced as the optical information recording medium 120 in the same way as Sample S15 of Practical Example 2 except that Prepared Resin R7 or R8 is used as the fluid material M1 and Prepared Resin R1 as the non-recording material M2.

As for Samples S43 and S44, Samples S43 and Samples S44 are produced as the optical information recording medium 120 in the same way as Sample S21 of Comparison Example 1 except that Prepared Resin R7 or R8 is used as the fluid material M1.

A table below is a list of Prepared Resins used as the recording areas 121a and the non-recording areas 121b for Samples S41 to S44:

| Sample No. | Recording Layer | Non-Recording Layer |
|---|---|---|
| S41 | R7 | R1 |
| S42 | R8 | R1 |
| S43 | R7 | - |
| S44 | R8 | - |

According to the table 3, Prepared Resins R7 and R8 contain thermosetting elements including an epoxy resin (SR-GLG) and a curing agent (MH-700). When Samples S41 to S44 are exposed to the recording optical beam L2c, the temperature around the focal point Fb rises, triggering a thermosetting reaction. It is confirmed that this reaction changes the refractive index around the focal point Fb.

In Practical Example 4, the change in refractive index caused by the thermosetting reaction is regarded as the recording mark RM. The recording sensitivity was measured as the refractive index was changing.

In this case, in a similar way to Practical Example 2, the optical information recording and reproducing device 5 emitted the recording optical beam L2c to a target position whose dept is 100 μm from the boundary between the recording layer 121X and the base plate 102 (i.e. the second recording area 121a from the base plate 102), and the recording sensitivity was measured until the recording mark RM was formed.

Whether the recording mark RM has been formed or not was determined by observing the target position of each sample through an optical microscope and confirming whether there is a strong reflection area which provides a contrast to the surrounding.

As for Sample S41 including the non-recording areas 121b, the recording sensitivity has improved, compared with Sample S43 including a single recording layer 101. The same could be said for Sample S42: the recording sensitivity of Sample S42 has improved, compared with Sample S43 including a single recording layer 101.

Accordingly, even when Samples S41 and S42 on which the recording mark RM is formed thanks to the change in refractive index are used, the presence of the non-recording area 121b helps the recording area 121a to effectively retain the heat generated around the focal point Fb of the recording optical beam L2c. It is confirmed that the recording sensitivity improves as in Practical Example 2.

(3-2) Operation and Effect

As described above, the recording layer 121X of the optical information recording medium 120 contains the thermosetting resin as the fluid material M1. Accordingly, when it is exposed to the recording optical beam L2c, the refractive index around the focal point Fb of the recording optical beam L2c changes, forming the recording mark RM.

Even in this case, since the recording layer 121X includes the recording area 121a and the non-recording area 121b, the recording sensitivity of the recording area 121a improves as in the second embodiment, increasing the recording speed.

(4) Other Embodiment

In the above-noted embodiment, the recording areas 121a and the non-recording areas 121b pile up in a direction of an optical axis of the recording optical beam L2c. In an example useful for understanding the invention , they may pile up in a direction perpendicular to the optical axis of the recording optical beam L2c.

Moreover, in the above-noted embodiment, the recording area 121a is sandwiched in between the non-recording areas 121b so that both sides of the recording area 121 are covered with the non-recording areas 121b. However, the present invention is not limited to this. For example the non-recording area 121b may be provided adjacent to the recording area 121a such that only one side of the recording area 121a is covered with the non-recording area 121b.

Furthermore, in the above-noted embodiment, the fluid material M1 includes the monomers and the photoinitiators. However, the present invention is not limited to this. As long as the photoinitiator residues will be left in the solidified recording layer 101, the fluid material M1 may also include a thermosetting monomer, a curing agent which solidifies this monomer, a binder polymer, an oligomer, an initiator for photopolymerization, and the like. In addition, a sensitizing dye can be added when needed.

Incidentally, as binder elements that are added when needed, there are compounds that can be used as a plasticizer: ethylene glycol, glycerin and its derivatives, multiple alcohols, phthalate ester and its derivatives, naphthalenedicarboxylic acid ester and its derivatives, phosphoric acid ester and its derivatives, fatty di-esters and its derivatives. As the photoinitiators that used at this time, compounds that can be dissolved appropriately by aftertreatment following the information recording process are desirable. Moreover, as the sensitizing dye, there are canine dye, coumarin dye, quinoline dye and the like.

Moreover, in the above-noted embodiment, an excessive amount of the photoinitiator is added so that the recording layer 101 contains the photoinitiator residues. However, the present invention is not limited to this. For example, a different photoinitiator, which is not the one used to solidify the monomers of the recording layer 101, can be added so that the recording layer 101 contains its residues.

Furthermore, in the above-noted embodiment, the amount of the photoinitiator added is greater than or equal to 0.79 percent by weight and less than or equal to 28.6 percent by weight with respect to the total weight of the fluid material M1. However, the present invention is not limited to this. For example, the amount of the photoinitiator added may be determined based on the type of the photoinitiator, the type of the monomers, and the additives.

Furthermore, in the above-noted embodiment, the photoinitiator whose vaporization temperature is greater than or equal to 140 deg C and less than or equal to 400 deg C is added to the recording layer 101. However, the present invention is not limited to this. For example, a chemical compound whose vaporization temperature is greater than or equal to 140 deg C and less than or equal to 400 deg C may be added to the recording layer 101.

Furthermore, in the above-noted embodiment, the recording layer's photoinitiator and photopolymer heats up by absorbing the recording optical beam L2c. However, the present invention is not limited to this. For example, either the photoinitiator or the photopolymer may heat up by absorbing the recording optical beam L2c. Moreover, the recording layer's photopolymer and other compounds (such as additives) added instead of the photoinitiator may heat up due to chemical reactions (such as chemical combination/decomposition reactions triggered by light or heat) caused by the recording optical beam L2c, increasing temperature around the focal point Fb.

Furthermore, in the above-noted embodiment, the recording layer 101 is produced by the solidifying of the ultra-violet curable resin. However, the present invention is not limited to this. Even if a vaporization material which is the equivalent of photoinitiator residues whose vaporization forms an air bubble is included in a recording layer of a thermosetting resin and a chemical reaction of the recording layer occurs after the emission of the second initialization beam FL2, the same effect as the above-noted embodiments can be obtained.

Furthermore, in the above-noted embodiment, during the initialization process (FIG. 2), the collimated initialization beam L1 is emitted to the optical information recording medium 100. However, the present invention is not limited to this. For example, the diverging or converging beam can be emitted to the optical information recording medium 100 as the initialization beam L1.

Furthermore, in the above-noted embodiment, the initialization beam L1, which is used for the initialization process of the optical information recording medium 100, the recording optical beam L2c, which is used to record information on the optical information recording medium 100, and the reading optical beam L2d, which is used to reproduce information from the optical information recording medium 100, have the same wavelength. However, the present invention is not limited to this. For example, while the recording optical beam L2c and the reading optical beam L2d have the same wavelength, the wavelength of the initialization beam L1 may be different from them. Alternatively, the initialization beam L1, the recording optical beam L2c, and the reading optical beam L2d may have a different wavelength.

In this case, it is desirable that: the wavelength of the initialization beam L1 is determined based on the sensitivity of the optical chemical reaction of the photopolymerized photopolymer of the recording layer 101; the wavelength of the recording optical beam L2c is the one that increases the temperature of materials due to thermal conduction or that is easily absorbed; the reading optical beam L2d is the one that offer the highest resolution. At this time, NA and the like of the objective lens 13 (FIG. 8) are adjusted according to the wavelength of the recording optical beam L2c and the reading optical beam L2d or the like. Furthermore, it may be replaced by two objective lens that have been optimized for the recording optical beam L2c and the reading optical beam L2d for the information recording and reproducing processes.

Moreover, as for the photopolymerized photopolymer of the recording layer 101, its composition and the like are appropriately adjusted so that it can present a good characteristic, based on the combination of the initialization beam L1, the recording optical beam L2c, and the reading optical beam L2d regarding their wavelengths.

Furthermore, in the above-noted embodiment, the wavelength of the recording optical beam L2c and the reading optical beam L2d, which are emitted from the recording and reproducing beam source 2 is between 405 and 406 nm. Alternatively, the recording optical beam L2c and the reading optical beam L2d may have different wavelengths, as long as air-bubble recording marks RM can be appropriately formed near the target position inside the recording layer 101.

Furthermore, in the above-noted embodiment, the initialization beam L1, the recording optical beam L2c and the reading optical beam L2d are emitted toward the base plate 102 of the optical information recording medium 100. However, the present invention is not limited to this. For example, the initialization beam L1 may be emitted toward the base plate 103; each light or beam can be emitted to one side of the medium or both sides of the medium.

Furthermore, in the above-noted embodiment, the optical information recording medium 100 is firmly put on a table 4; by moving the optical pickup 7 in X, Y and Z directions, the recording mark RM is formed at the target position, which is an arbitrary position inside the recording layer 101. However, the present invention is not limited to this. For example, the optical information recording medium 100 may be an optical information recording medium such as CD and DVD; by rotating the optical information recording medium and at the same time moving the optical pickup 7 in X and Z directions, information may be recorded or reproduced. In this case, the tracking control process and the focus control process can be realized after forming a track (such as a groove or a pit) at a boundary between the base plate 102 and the recording layer 101.

Furthermore, in the above-noted embodiment, the recording layer 101 of the optical information recording medium 100 is a discoid disc: one side of the recording layer 101 is about 50 mm, and the thickness t1 is about 0.05 to 1.0 mm. However, the present invention is not limited to this. The dimension may vary. Other shapes, including a square, or rectangular shape and a rectangular parallelepiped, can be applied. In this case, the thickness t1 in Z direction may be determined based on the transmissivity to the recording optical beam L2c and the reading optical beam L2d and the like.

Accordingly, the shape of the base plates 102 and 103 may be not limited to a square, or rectangular shape, as long as it corresponds to the shape of the recording layer 101. The material of the base plates 102 and 103 could be polycarbonate or the like instead of glass, as long as they allow the initialization beam L1, the recording optical beam L2c, the reading optical beam L2d, and the returning optical beam L3 to pass therethrough at a relatively high transmissivity rate. Moreover, instead of the returning optical beam L3, a photodetector that receives the transmitted light of the reading optical beam L2d can be provided; the optically-modulated reading optical beam L2d, which varies depending on whether the recording mark RM exists, may be detected to reproduce information. Furthermore, if the desired intensity is obtained only from the recording layer 121, the base plates 102 and 103 can be omitted from the optical information recording medium 120.

Furthermore, in the above-noted embodiment, the optical information recording medium 120, which is an optical information recording medium, includes the recording layer 121, which is a recording layer. However, the present invention is not limited to this. The optical information recording medium may include other types of recording layer.

The above configuration and method can be also applied to an optical information recording and reproducing device that records and reproduces a large amount of information, such as video content and audio content, on or from a recording medium, such as an optical information recording medium, and the like.

Although particular embodiments have been described herein, it will be appreciated that the invention is not limited thereto and that many modifications and additions thereto may be made within the scope of the invention which is defined by the appended claims. For example, various combinations of the features of the following dependent claims can be made with the features of the independent claims without departing from the scope of the present invention.

**Claims**

1. An optical information recording medium (120) comprising
   a recording layer (121) that includes:

   a recording area (121a) on which a cavity is formed as a recording mark as a result of an increase in temperature around a focal point after absorbing a recording beam converged for recording of information in accordance with the wavelength of the recording beam and from which, when a predetermined reading beam is emitted for reproducing of the information, the information is reproduced based on the optically modulated reading beam; and
   a non-recording (121b) area provided adjacent to the recording area to prevent the heat around the focal point from dispersing, wherein the recording area is a resin that has been solidified by polymerization and further comprises vaporization material, and wherein the recording area and the non-recording area appear alternately in the direction of the thickness of the optical information recording medium.

2. The optical information recording medium according to claim 1, wherein
   the recording area is sandwiched in between the non-recording areas so that both sides of the recording area are covered with the non-recording areas.

3. The optical information recording medium according to claim 2, wherein
   in the recording layer, a plurality of the recording areas and a plurality of the non-recording areas pile up so that the recording area and the non-recording area appear alternately.

4. The optical information recording medium according to claim 3, wherein
   the non-recording area has a low affinity for the recording area.

5. The optical information recording medium according to claim 4, wherein
   the non-recording area is made from a different resin material from that of the recording area.

6. The optical information recording medium according to claim 5, wherein
   the recording area meets the following equation:

$$ta \leqq 3 \times \frac{2\lambda}{n\pi} \times \left\{ \frac{1}{\tan(\sin^{-1} - (NA/n))} \right\}^2 \qquad \cdots\cdots(1)$$

wherein $\lambda$ represents the wavelength of the recording beam, NA represents the numerical aperture of an objective lens converging the recording beam, ta represents the thickness of the recording area in a direction of the optical axis of the recording beam, and n represents the refractive index of the recording area.

7. The optical information recording medium according to claim 3, wherein
   the non-recording area's glass transition point is higher than that of the recording area.

8.  The optical information recording medium according to claim 7, wherein
    the non-recording area's glass transition point is 30 degrees Celsius or more higher than that of the recording area.

9.  The optical information recording medium according to claim 6, wherein
    the recording area includes a vaporization material whose vaporization temperature is greater than or equal to 140 degrees Celsius and less than or equal to 400 degrees Celsius, wherein the portion around the focal point heats up during the recording of the information, and vaporizes the vaporization material to form the recording mark.

10. The optical information recording medium according to claim 9, wherein:

    the recording area is an ultra-violet curable resin that has been solidified by photopolymerization of a fluid material including at least a monomer or an oligomer, and a photoinitiator which is the equivalent of the vaporization material; and
    the fluid material is designed to leave the photoinitiator in the solidified recording layer due to the excessive amount of the photoinitiator added to the monomer or oligomer.


**Patentansprüche**

1.  Optisches Informationsaufzeichnungsmedium (120), aufweisend:

    eine Aufzeichnungsschicht (121), die umfasst:

    einen Aufzeichnungsbereich (121a), auf dem ein Hohlraum als eine Aufzeichnungsmarke ausgebildet ist als ein Resultat einer Erhöhung der Temperatur um einen Fokuspunkt herum nach Absorbierung eines zur Aufzeichnung von Information konvergierten Aufzeichnungsstrahls entsprechend der Wellenlänge des Aufzeichnungsstrahls, und von dem, wenn ein vorbestimmter Lesestrahl zur Wiedergabe der Information emittiert wird, die Information auf Basis des optisch modulierten Lesestrahls wiedergegeben wird, und
    einen Nicht-Aufzeichnungsbereich (121b), der an den Aufzeichnungsbereich angrenzend bereitgestellt ist, um die Wärme um den Fokuspunkt herum an einem Dispergieren zu hindern, wobei der Aufzeichnungsbereich ein Harz ist, das durch Polymerisation fest geworden ist und außerdem ein Verdampfungsmaterial aufweist, und wobei der Aufzeichnungsbereich und der Nicht-Aufzeichnungsbereich in der Richtung der Dicke des optischen Informationsaufzeichnungsmediums abwechselnd auftreten.

2.  Optisches Informationsaufzeichnungsmedium nach Anspruch 1, wobei
    der Aufzeichnungsbereich zwischen den Nicht-Aufzeichnungsbereichen angeordnet ist, so dass beide Seiten des Aufzeichnungsbereichs von den Nicht-Aufzeichnungsbereichen bedeckt sind.

3.  Optisches Informationsaufzeichnungsmedium nach Anspruch 2, wobei
    in der Aufzeichnungsschicht mehrere der Aufzeichnungsbereiche und mehrere der Nicht-Aufzeichnungsbereiche gestapelt sind, so dass der Aufzeichnungsbereich und der Nicht-Aufzeichnungsbereich abwechselnd auftreten,

4.  Optisches Informationsaufzeichnungsmedium nach Anspruch 3, wobei
    der Nicht-Aufzeichnungsbereich eine niedrige Affinität für den Aufzeichnungsbereich aufweist.

5.  Optisches Infomationsaufzeichnungsmedium nach Anspruch 4, wobei
    der Nicht-Aufzeichnungsbereich aus einem von dem des Aufzeichnungsbereichs differenten Harzmaterial gemacht ist.

6.  Optisches Informationsaufzeichnungsmedium nach Anspruch 5, wobei der Aufzeichnungsbereich der folgenden Gleichung genügt:

$$ta \le 3 \times \frac{2\lambda}{n\pi} \times \left\{ \frac{1}{\tan\left(\sin^{-1} - (NA/n)\right)} \right\}^2 , \qquad \qquad ...(1)$$

wobei λ die Wellenlänge des Aufzeichnungsstrahls repräsentiert, NA die numerische Apertur einer den Aufzeichnungsstrahl konvergierenden Objektivlinse repräsentiert, ta die Dicke des Aufzeichnungsbereichs in einer Richtung der optischen Achse des Aufzeichnungsstrahls repräsentiert und n den Brechungsindex des Aufzeichnungsbereichs repräsentiert.

**7.** Optisches Informationsaufzeichnungsmedium nach Anspruch 3, wobei
der Glasübergangspunkt des Nicht-Aufzeichnungsbereichs höher als der des Aufzeichnungsbemichs ist.

**8.** Optisches Informationsaufzeichnungsmedium nach Anspruch 7, wobei
der Glasübergangspunkt des Nicht-Aufzeichnungsbereichs um 30 Grad Celsius oder mehr höher als der des Aufzeichnungsbereichs ist.

**9.** Optisches Informationsaufzeichnungsmedium nach Anspruch 6, wobei
der Aufzeichnungsbereich ein Verdampfungsmaterial aufweist, dessen Verdampfungstemperatur größer als oder gleich 140 Grad Celsius ist und kleiner als oder gleich 400 Grad Celsius ist, wobei sich der Teil um den Fokuspunkt herum während der Aufzeichnung der Information erwärmt und das Verdampfungsmaterial zur Bindung der Aufzeichnungsmarke verdampft,

**10.** Optisches Informationsaufzeichnungsmedium nach Anspruch 9, wobei:

der Aufzeichnungsbereich ein ultraviolett-härtbares Harz, das durch Photopolymerisation eines wenigstens ein Monomer oder ein Oligomer umfassenden Fluidmaterials fest geworden ist, und ein Photoinitiator ist, der das Äquivalent des Verdampfungsmaterials ist, und
das Fluidmaterial konzipiert ist, um den Photoinitiator in der fest gewordenen Aufzeichnungsschicht aufgrund der exzessiven Menge des dem Monomer oder Oligomer hinzugefügten Photoinitiators zu belassen.


## Revendications

**1.** Support d'enregistrement d'informations optiques (120) comprenant :

une couche d'enregistrement (121) qui comprend :

une zone d'enregistrement (121a) sur laquelle une cavité est formée en tant que marque d'enregistrement en conséquence d'une augmentation de température autour d'un foyer après l'absorption d'un faisceau d'enregistrement convergent pour l'enregistrement d'informations conformément à la longueur d'onde du faisceau d'enregistrement et à partir de laquelle, lorsqu'un faisceau de lecture prédéterminé est émis pour reproduire les informations, les informations sont reproduites sur la base du faisceau de lecture modulé optiquement ; et
une zone de non enregistrement (121b) prévue adjacente à la zone d'enregistrement pour éviter que la chaleur autour du foyer ne se disperse, dans lequel la zone d'enregistrement est une résine qui a été solidifiée par polymérisation et comprend en outre un matériau de vaporisation, et dans lequel la zone d'enregistrement et la zone de non enregistrement apparaissent alternativement dans la direction de l'épaisseur du support d'enregistrement d'informations optiques.

**2.** Support d'enregistrement d'informations optiques selon la revendication 1, dans lequel
la zone d'enregistrement est intercalée entre les zones de non enregistrement de sorte que les deux côtés de la zone d'enregistrement soient recouverts par les zones de non enregistrement.

**3.** Support d'enregistrement d'informations optiques selon la revendication 2, dans lequel
dans la couche d'enregistrement, une pluralité des zones d'enregistrement et une pluralité des zones de non enregistrement s'entassent de sorte que la zone d'enregistrement et la zone de non enregistrement apparaissent alternativement.

**4.** Support d'enregistrement d'informations optiques selon la revendication 3, dans lequel
la zone de non enregistrement a une faible affinité pour la zone d'enregistrement.

**5.** Support d'enregistrement d'informations optiques selon la revendication 4, dans lequel

la zone de non enregistrement est réalisée à partir d'un matériau résineux différent de celui de la zone d'enregistrement.

6. Support d'enregistrement d'informations optiques selon la revendication 5, dans lequel la zone d'enregistrement satisfait à l'équation suivante :

$$ta \leq 3 \times \frac{2\lambda}{n\pi} \times \left\{ \frac{1}{\tan(\sin^{-1} - (NA/n))} \right\}^2 \qquad \cdots\cdots(1)$$

dans laquelle $\lambda$ représente la longueur d'onde du faisceau d'enregistrement, NA représente l'ouverture numérique d'une lentille de focalisation faisant converger le faisceau d'enregistrement, ta représente l'épaisseur de la zone d'enregistrement dans une direction de l'axe optique du faisceau d'enregistrement et n représente l'indice de réfraction de la zone d'enregistrement.

7. Support d'enregistrement d'informations optiques selon la revendication 3, dans lequel le point de transition vitreuse de la zone de non enregistrement est supérieur à celui de la zone d'enregistrement.

8. Support d'enregistrement d'informations optiques selon la revendication 7, dans lequel le point de transition vitreuse de la zone de non enregistrement est supérieur de 30°C ou plus à celui de la zone d'enregistrement.

9. Support d'enregistrement d'informations optiques selon la revendication 6, dans lequel la zone d'enregistrement comprend un matériau de vaporisation dont la température de vaporisation est supérieure ou égale à 140 °C et inférieure ou égale à 400 °C, dans lequel la partie autour du foyer chauffe pendant l'enregistrement des informations et vaporise le matériau de vaporisation pour former la marque d'enregistrement.

10. Support d'enregistrement d'informations optiques selon la revendication 9, dans lequel la zone d'enregistrement est une résine durcissable sous ultraviolets qui a été solidifiée par photopolymérisation d'un matériau fluide comprenant au moins un monomère ou un oligomère et un photoinitiateur qui est l'équivalent du matériau de vaporisation ; et le matériau fluide est conçu pour laisser le photoinitiateur dans la couche d'enregistrement solidifiée du fait de la quantité excessive de photoinitiateur ajoutée au monomère ou à l'oligomère.

100 OPTICAL INFORMATION RECORDING MEDIUM

102 BASE PLATE

101 RECORDING LAYER

103 BASE PLATE

FIG.1A

100

102 BASE PLATE

101

FIG.1B

100

102 BASE PLATE

101 RECORDING LAYER

103 BASE PLATE

FIG.1C

1

~2

~FL1

100 OPTICAL INFORMATION
RECORDING MEDIUM

~3 TABLE

FIG.2

A SPACE

P POLYMER

L PHOTOINITIATOR
RESIDUES

FIG.3

FIG.4A

FIG.4B

FIG.4C

5

7 OPTICAL PICKUP

10 RECORDING AND REPRODUCING BEAM SOURCE

11 COLLIMATOR LENS

12 BEAM SPLITTER

16 LENS

6 CONTROL SECTION

12S

15A

14 CONDENSER LENS

15 PINHOLE PLATE

17 PHOTODETECTOR

13 OBJECTIVE LENS

100 OPTICAL INFORMATION RECORDING MEDIUM

8 TABLE

FIG.5

1

~L2c

~13 OBJECTIVE LENS

100 OPTICAL INFORMATION
RECORDING MEDIUM

~101 RECORDING LAYER

RM RECORDING MARK

FIG.6A

1

L2d~

12   14

L3

16   17

~13 OBJECTIVE LENS

100 OPTICAL INFORMATION
RECORDING MEDIUM

~101 RECORDING LAYER

RM RECORDING MARK

FIG.6B

FIG.7A

FIG.7B

## 120 OPTICAL INFORMATION RECORDING MEDIUM

FIG.8A

FIG.8B

EA
VALID OPTICAL AREA

CAh | EAh

Fb

Z
X

L2c RECORDING
OPTICAL BEAM

FIG.9

EA VALID OPTICAL AREA

101 RECORDING
LAYER

Fb FOCAL POINT

Z
X
Y

FIG.10

EA VALID OPTICAL AREA

121b NON-RECORDING
AREA

121a RECORDING
AREA

EAh

ta

121b NON-RECORDING
AREA

Fb FOCAL POINT

Z

X

Y

FIG.11

121

EA VALID OPTICAL AREA

121b NON-RECORDING AREA

121a RECORDING AREA

EAh

ta

Fb FOCAL POINT

**FIG.12A**

121

RM RECORDING MARK

121b NON-RECORDING AREA

121a RECORDING AREA

ta, RMh

121b

Z

**FIG.12B**

<u>120</u>

**FIG.13A**

<u>120a</u>

**FIG.13B**

<u>120a</u>

**FIG.13C**

102

121b
121a
121b
121c

103

FIG.14A

DRYING

121b

102

FIG.14B

L1

121a
121b

102

FIG.14C

DRYING

121b
121a
121b

102

FIG.14D

121c
121b
121a
121b
102

**FIG.15A**

L1

103
121c
121b
121a
121b
102

**FIG.15B**

EP 2 068 312 B1

120

102

80 μm — 121b

6 μm — 121a
10 μm — 121b
6 μm — TP TARGET POSITION
10 μm — 121a

121a
121b

6 μm — 121a RECORDING AREA
10 μm — 121b NON-RECORDING AREA
10~15 μm — 121c ADHESIVE AREA

103

FIG.16

**FIG.17A**

**FIG.17B**

**EP 2 068 312 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006182924 A1
- US 4300227 A
- US 4285056 A